# EUROPEAN PATENT APPLICATION

(11) **EP 4 650 947 A1**
(43) Date of publication of application: **19.11.2025**
(21) Application number: 24830881.9
(22) Date of filing: 27.06.2024
(51) Int. Cl.: G06F 8/61

(54) **APPLICATION RUNNING METHOD, ELECTRONIC DEVICE AND STORAGE MEDIUM**

(30) Priority: 30.06.2023 CN 202310802854
(71) Applicant: Huawei Technologies Co., Ltd., Shenzhen, Guangdong 518129 (CN)
(72) Inventor: HAN, Feng, Shenzhen, Guangdong 518129 (CN)
(74) Representative: Gill Jennings & Every LLP
(86) International application number: PCT/CN2024/101963
(87) International publication number: WO 2025/002248

(57) **Abstract**

This application provides an application running method, an electronic device, and a storage medium. The method includes: In response to a start operation performed by a user on a first application, an electronic device obtains a first storage path of an installation package of the first application and a second storage path of a shared implementation package on which the first application depends, where the first application and the shared implementation package are installed on the electronic device, the shared implementation package is used to implement a preset function, and the first storage path is different from the second storage path. The electronic device obtains the installation package of the first application based on the first storage path, where reference information to the shared implementation package is configured for the installation package of the first application. The electronic device runs the first application based on the first storage path, the reference information, and the second storage path. According to the method, different applications can share a same function package, a size of an installation package of an application is reduced, and a download speed of the installation package of the application is improved.

## Description

This application claims priority to Chinese Patent Application No. 202310802854.0, filed with the China National Intellectual Property Administration on June 30, 2023 and entitled "APPLICATION RUNNING METHOD, ELECTRONIC DEVICE, AND STORAGE MEDIUM", which is incorporated herein by reference in its entirety.

### TECHNICAL FIELD

This application relates to the field of terminal technologies, and in particular, to an application running method, an electronic device, and a storage medium.

### BACKGROUND

With advancement of science and technology and development of intelligent electronic devices, to meet use requirements of users, developers develop various functional applications. The users may download and install applications on electronic devices, and experience different application features through the installed applications, for example, playing music and playing a video.

Currently, an installation package of an application may include a plurality of different function packages, and different function packages may implement different functions. For example, a function package of an application may include but is not limited to a basic package, a configuration package, an entry (Entry) function package, a feature (Feature) function package, or the like.

As functions of an application are increasingly enriched, the application has more function packages. Consequently, an installation package of the application is excessively large, it takes a long time for an electronic device to download the installation package of the application, and a user also needs to wait for a long time to download the installation package of the application. As a result, user experience is poor.

### SUMMARY

This application provides an application running method, an electronic device, and a storage medium, so that different applications can share a same function package, a size of an installation package of an application is reduced, and a download speed of the installation package of the application is improved.

According to a first aspect, this application provides an application running method. The method includes: In response to a start operation performed by a user on a first application, an electronic device obtains a first storage path of an installation package of the first application and a second storage path of a shared implementation package on which the first application depends, where the first application and the shared implementation package are installed on the electronic device, the shared implementation package is used to implement a preset function, and the first storage path is different from the second storage path. The electronic device obtains the installation package of the first application based on the first storage path, where reference information to the shared implementation package is configured for the installation package of the first application. The electronic device runs the first application based on the first storage path, the reference information, and the second storage path.

The reference information to the shared implementation package may include that the electronic device invokes an API of the shared implementation package. The electronic device may export the shared implementation package based on the API of the shared implementation package, and then load and run the shared implementation package. In addition to the API of the shared implementation package, the reference information to the shared implementation package may further include other information. This is not limited in this application.

Storage paths of the installation package of the first application and the shared implementation package on which the first application depends are different. The shared implementation package may be used by different applications. When the first application is started, the electronic device may obtain the second storage path of the shared implementation package on which the first application depends, and then run the first application based on the installation package of the first application and the shared implementation package on which the first application depends. According to the method, different applications can share a same function package, a size of an installation package of an application is reduced, and a download speed of the installation package of the application is improved.

With reference to the first aspect, in a possible implementation, the method further includes: In response to a start operation performed by the user on a second application, the electronic device obtains a third storage path of an installation package of the second application and the second storage path of the shared implementation package on which the second application depends, where the second application and the shared implementation package are installed on the electronic device, and the third storage path is different from the second storage path. The electronic device obtains the installation package of the second application based on the third storage path, where the reference information to the shared implementation package is configured for the installation package of the second application. The electronic device runs the second application based on the third storage path, the reference information, and the second storage path.

A same shared implementation package may be used by different applications. When different applications invoke a same shared implementation package, reference information to the shared implementation package on which each application depends needs to be recorded in an installation package of the application, so that when the second application is started, the electronic device can obtain the second storage path of the shared implementation package on which the second application depends, and further run the first application based on the installation package of the second application and the shared implementation package on which the second application depends. In this way, different applications can share a same function package, a size of an installation package of an application is reduced, and a download speed of the installation package of the application is improved.

With reference to the first aspect, in a possible implementation, before the electronic device runs the first application based on the first storage path, the reference information, and the second storage path, the method further includes: The electronic device loads the first storage path and the second storage path into a process sandbox of the first application. That the electronic device runs the first application based on the first storage path, the reference information, and the second storage path specifically includes: The electronic device runs the first application in the process sandbox of the first application based on the first storage path, the reference information, and the second storage path.

In some embodiments, the electronic device may alternatively load the reference information to the shared implementation package on which the first application depends into the process sandbox of the first application, or may not load the reference information to the shared implementation package on which the first application depends into the process sandbox of the first application. This is not limited in this application.

When the first application is started, the electronic device may load the first storage path of the installation package of the first application and the second storage path of the shared implementation package on which the first application depends into the process sandbox of the first application. Only the first application can access data in the process sandbox of the first application, and another application cannot access the data in the process sandbox of the first application, so that an unused application can be run independently, and running security of the application can also be ensured.

With reference to the first aspect, in a possible implementation, before the response of the electronic device to the start operation performed by the user on the first application, the method further includes: The electronic device receives a third user operation, downloads and installs the installation package of the first application in response to the third user operation, and stores the installation package of the first application in the first storage area, where a storage path of the installation package of the first application stored in the first storage area is the first storage path, the installation package of the first application includes a shared interface package, and the shared interface package includes an identifier of the shared implementation package on which the first application depends. The electronic device downloads the shared implementation package when the electronic device determines, based on the identifier of the shared implementation package, that the shared implementation package is not installed on the electronic device. The electronic device installs the shared implementation package, and stores the shared implementation package in the second storage area, where a storage path of the shared implementation package stored in the second storage area is the second storage path.

With reference to the first aspect, in a possible implementation, the method further includes: When the electronic device determines, based on the identifier of the shared implementation package, that the shared implementation package is installed on the electronic device, the electronic device obtains the second storage path of the shared implementation package based on the identifier of the shared implementation package.

Optionally, the electronic device may send the identifier of the shared implementation package to a server, and the electronic device receives the shared implementation package sent by the server, and installs the shared implementation package.

In this way, when downloading and installing the first application, the electronic device may download only the installation package of the first application. When determining whether the electronic device locally stores the shared implementation package on which the first application depends, if the electronic device locally stores the shared implementation package on which the first application depends, the electronic device may not download the shared implementation package, to reduce an amount of downloaded data of the installation package of the first application. When the electronic device does not locally store the shared implementation package on which the first application depends, the electronic device downloads the shared implementation package.

With reference to the first aspect, in a possible implementation, the shared interface package further includes the reference information to the shared implementation package. Before the electronic device runs the first application based on the first storage path, the reference information, and the second storage path, the method further includes: The electronic device obtains the shared interface package from the installation package of the first application. The electronic device obtains the reference information to the shared implementation package from the shared interface package.

A same shared implementation package may be used by different applications. When different applications invoke a same shared implementation package, reference information to the shared implementation package on which each application depends needs to be recorded in an installation package of the application.

With reference to the first aspect, in a possible implementation, after the electronic device obtains the second storage path of the shared implementation package, and before the response of the electronic device to the start operation performed by the user on the first application, the method further includes: The electronic device obtains installation information of the first application based on the first storage path of the installation package of the first application and the second storage path of the shared implementation package on which the first application depends. That in response to the start operation performed by the user on the first application, the electronic device obtains the first storage path of the installation package of the first application and the second storage path of the shared implementation package on which the first application depends specifically includes: In response to the start operation performed by the user on the first application, the electronic device obtains the installation information of the first application. The electronic device obtains, from the installation information of the first application, the first storage path of the installation package of the first application and the second storage path of the shared implementation package on which the first application depends.

In this way, before starting the first application, the electronic device may obtain the installation information of the first application based on the first storage path of the installation package of the first application and the second storage path of the shared implementation package on which the first application depends. After starting the first application, the electronic device may quickly obtain, from the installation information of the first application, the first storage path of the installation package of the first application and the second storage path of the shared implementation package on which the first application depends, to improve a startup speed of the first application.

With reference to the first aspect, in a possible implementation, that in response to the start operation performed by the user on the first application, the electronic device obtains the first storage path of the installation package of the first application and the second storage path of the shared implementation package on which the first application depends specifically includes: In response to the start operation performed by the user on the first application, the electronic device obtains the first storage path of the installation package of the first application based on an identifier of the first application. The electronic device obtains the installation package of the first application based on the first storage path. The electronic device obtains, from the installation package of the first application, the identifier of the shared implementation package on which the first application depends. The electronic device obtains the second storage path of the shared implementation package based on the identifier of the shared implementation package.

In another possible implementation, before starting the first application, the electronic device does not obtain the installation information of the first application in advance. After starting the first application, the electronic device may obtain, in real time, the first storage path of the installation package of the first application and the second storage path of the shared implementation package on which the first application depends.

With reference to the first aspect, in a possible implementation, after the electronic device runs the first application based on the first storage path, the reference information, and the second storage path, the method further includes: The electronic device uninstalls the shared implementation package when the shared implementation package is not used within first duration.

In this way, the electronic device may dynamically delete a shared implementation package that is not used for a long time. For example, the shared implementation package that is not used for a long time may be a shared implementation package before version update, to save storage space of the electronic device.

With reference to the first aspect, in a possible implementation, that the electronic device installs the shared implementation package specifically includes: When the electronic device determines that the installation package of the first application includes the shared interface package, the electronic device obtains, from the shared interface package, the identifier and a first version number that are of the shared implementation package on which the first application depends. The electronic device downloads a first-version shared implementation package when the electronic device determines, based on the identifier and the first version number that are of the shared implementation package, that the electronic device does not store the first-version shared implementation package. The electronic device installs the first-version shared implementation package, and stores the first-version shared implementation package in the second storage area, where a storage path of the first-version shared implementation package stored in the second storage area is the second storage path.

In another possible implementation, when the electronic device determines, based on the identifier and the first version number that are of the shared implementation package, that the electronic device stores the first-version shared implementation package, the electronic device obtains the second storage path of the first-version shared implementation package based on the identifier and the first version number that are of the shared implementation package.

In this way, the shared implementation package on which the first application depends may be distinguished by version number. When downloading and installing the first application, the electronic device may download only the installation package of the first application. When determining whether the electronic device locally stores the shared implementation package on which the first application depends, if the electronic device locally stores the first-version shared implementation package on which the first application depends, the electronic device may not download the first-version shared implementation package, to reduce an amount of downloaded data of the installation package of the first application. When the electronic device does not locally store the first-version shared implementation package on which the first application depends, the electronic device downloads the first-version shared implementation package.

With reference to the first aspect, in a possible implementation, that the electronic device downloads the first-version shared implementation package specifically includes: The electronic device sends the identifier and the first version number that are of the shared implementation package to a server. The electronic device receives the first-version shared implementation package sent by the server.

With reference to the first aspect, in a possible implementation, after the electronic device receives the first-version shared implementation package sent by the server, the method further includes: The electronic device receives a second-version shared implementation package sent by the server, and updates the first-version shared implementation package to the second-version shared implementation package.

In this way, the electronic device may also automatically update to a latest version. When the first application needs to use the second-version shared implementation package, the electronic device does not need to download the second-version shared implementation package from the server in real time.

With reference to the first aspect, in a possible implementation, the preset function includes any one of the following: a login function, a payment function, a map function, a navigation function, a networking function, an advertisement display function, a data storage function, an image recognition function, a MeeTime function, a projection function, a communication function, a camera function, a multimedia function, a device virtualization function, and a device security function.

According to a second aspect, this application provides an application running method. The method includes: In response to a start operation performed by a user on a first application, an electronic device obtains a storage path of a shared implementation package on which the first application depends, where the first application and the shared implementation package are installed on the electronic device. The electronic device loads the shared implementation package into a process sandbox of the first application. The electronic device displays a user interface of the first application. In response to a tap operation performed by the user on the user interface, the electronic device implements a preset function of a tap operation based on the shared implementation package. The preset function includes any one of the following: a login function, a payment function, a map function, a navigation function, a networking function, an advertisement display function, a data storage function, an image recognition function, a MeeTime function, a projection function, a communication function, a camera function, a multimedia function, a device virtualization function, and a device security function.

With reference to the second aspect, in a possible implementation, before the response of the electronic device to the start operation performed by the user on the first application, the method further includes: The electronic device receives an operation that the user downloads the first application, downloads and installs an installation package of the first application in response to the operation, and stores the installation package of the first application in a first storage area. The electronic device obtains a shared interface package from the installation package of the first application, and obtains an identifier of the shared implementation package from the shared interface package. The electronic device downloads the shared implementation package when the electronic device determines, based on the identifier of the shared implementation package, that the electronic device does not store the shared implementation package. The electronic device installs the shared implementation package, and stores the shared implementation package in a second storage area. The electronic device obtains the storage path of the shared implementation package based on the shared implementation package stored in the second storage area.

With reference to the second aspect, in a possible implementation, the method further includes: When the electronic device determines, based on the identifier of the shared implementation package, that the shared implementation package is stored in the second storage area on the electronic device, the electronic device obtains the storage path of the shared implementation package based on the shared implementation package stored in the second storage area.

With reference to the second aspect, in a possible implementation, that the electronic device implements the preset function of the tap operation based on the shared implementation package specifically includes: The electronic device obtains the shared interface package from the installation package of the first application. The electronic device obtains reference information to the shared implementation package from the shared interface package. The electronic device implements the preset function of the tap operation based on the reference information to the shared implementation package and the shared implementation package.

It should be noted that any possible implementation of the application running method provided in the first aspect is also applicable to the application running method provided in the second aspect.

According to a third aspect, this application provides an electronic device. The electronic device includes a processor and a memory, the memory is coupled to the processor, the memory is configured to store computer program code, the computer program code includes computer instructions, and the processor invokes the computer instructions, to perform the application running method provided in any possible implementation of any aspect.

According to a fourth aspect, this application provides a computer-readable storage medium, configured to store computer instructions. When the computer instructions are run on an electronic device, the electronic device is enabled to perform the application running method provided in any possible implementation of any aspect.

According to a fifth aspect, this application provides a computer program product. When the computer program product runs on an electronic device, the electronic device is enabled to perform the application running method provided in any possible implementation of any aspect.

For beneficial effect of the second aspect to the fifth aspect, refer to the descriptions of the beneficial effect in the first aspect. Details are not described herein again in this application.

### BRIEF DESCRIPTION OF DRAWINGS

FIG. 1 is a diagram of composition structures of an installation package of a first application and an installation package of a second application according to an embodiment of this application;
FIG. 2 is a diagram according to an embodiment of this application;
FIG. 3 is another diagram according to an embodiment of this application;
FIG. 4A to FIG. 4D are diagrams in which an electronic device 100 receives a user operation and downloads and installs a first application;
FIG. 5A is a diagram in which an electronic device 100 downloads an installation package of a first application;
FIG. 5B is a diagram in which an electronic device 100 stores an hsp package and an application installation package;
FIG. 6A is another diagram in which an electronic device 100 downloads an installation package of a first application;
FIG. 6B is another diagram in which an electronic device 100 stores an hsp package and an application installation package;
FIG. 7 is a diagram of interaction between function modules for running an hsp package;
FIG. 8 is another diagram of interaction between function modules for running an hsp package;
FIG. 9A and FIG. 9B are a schematic flowchart of a method for running a first application;
FIG. 10A and FIG. 10B are a diagram of running a first application by an application startup module;
FIG. 11 is a diagram of a hardware structure of an electronic device; and
FIG. 12 is a diagram of a software structure of an electronic device.

### DESCRIPTION OF EMBODIMENTS

The technical solutions according to embodiments of this application are clearly and completely described in the following with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicitly indicating a quantity of indicated technical features. Therefore, a feature limited by "first" or "second" may explicitly or implicitly include one or more of the features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form that can be accepted by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

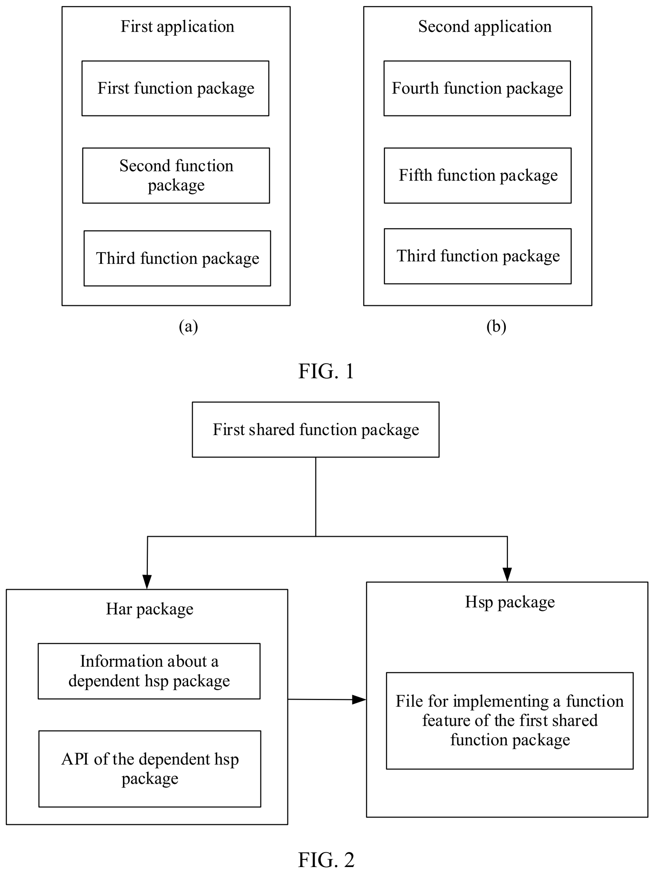

As shown in (a) and (b) in FIG. 1, an installation package of a first application may include a plurality of different function packages, and the different function packages may implement different function features. For example, the first application may include a first function package, a second function package, and a third function package. Different function packages may implement different function features. For example, the first function package may include a basic function package of the first application or an entry function package of the first application, and the second function package may include a configuration function package of the first application, for example, a resource package related to a language configuration of the first application or a resource package related to a central processing unit (central processing unit, CPU) configuration of the first application. The third function package may include a feature function package, for example, a related resource package that provides a map capability, a networking capability, an advertisement capability, or the like.

Similarly, an installation package of a second application may also include a plurality of different function packages. For example, the second application may include a fourth function package, a fifth function package, and a third function package. The different function packages may implement different function features. For example, the fourth function package may include a basic function package of the second application or an entry function package of the second application, and the fifth function package may include a configuration function package of the second application, for example, a resource package related to a language configuration of the second application or a resource package related to a central processing unit configuration of the second application. The second application also includes the third function package, and the third function package in the second application is the same as the third function package in the first application.

When downloading the first application, an electronic device 100 needs to download all of the plurality of function packages of the first application, for example, the first function package, the second function package, and the third function package.

When downloading the second application, the electronic device 100 also needs to download all of the plurality of function packages of the second application, for example, the fourth function package, the fifth function package, and the third function package.

The first application and the second application have the same third function package. However, when the first application and the second application are downloaded, the same third function package needs to be downloaded a plurality of times, and the electronic device 100 also needs to store a plurality of third function packages.

In another possible implementation, a developer may develop a sixth function package whose function is the same as or similar to that of the third function package, and the sixth function package is integrated and used by the second application. When downloading the first application and the second application, the electronic device 100 needs to download the third function package and the sixth function package that have the same or similar function, and store the third function package and the sixth function package that have the same or similar function.

In this way, memory space of the electronic device 100 is wasted. In addition, when there are a large quantity of function packages of the first application and the second application, the user needs to wait for a longer time to download a plurality of function packages of the first application and the second application.

In view of this, the following embodiments of this application provide a shared function package and an application running method based on the shared function package. The shared function package can implement a preset function, for example, a login function, a payment function, a map function, a navigation function, a networking function, an advertisement display function, a data storage function, an image recognition function, a MeeTime function, a projection function, a communication function, a camera function, a multimedia function, a device virtualization function, and a device security function. The shared function package may be shared between different applications. For example, the first application needs to use a first shared package. If the electronic device 100 has stored the first shared package, when the installation package of the first application is downloaded, the first shared package does not need to be downloaded, to reduce an amount of downloaded data of the installation package of the first application.

Next, the following provides detailed descriptions with reference to a development phase, a download phase, and a use phase of the shared function package.

### Shared function package development phase

The shared function package may include a shared implementation package and a shared interface package.

The shared implementation package may include a file for implementing a function feature of a first shared function package, for example, including but not limited to a js/ts file, a standard program library, a configuration file, and a resource file. The shared implementation package may be shared between different applications.

The shared interface package is integrated into an installation package of an application, and the electronic device may obtain the shared implementation package through mapping based on the shared interface package. The shared interface package may include but is not limited to: information about a shared implementation package on which the application depends and reference information to the shared implementation package on which the application depends. The information about the shared implementation package on which the application depends includes but is not limited to an identifier of the shared implementation package on which the application depends or an identifier of the shared implementation package on which the application depends and a version number of the shared implementation package on which the application depends. The reference information to the shared implementation package may include an application programming interface (application programming interface, API) for the electronic device to invoke the shared implementation package. The electronic device may export the shared implementation package based on an API of the shared implementation package, and then load and run the shared implementation package.

In addition to the API, the reference information to the shared implementation package may alternatively be in another implementation. This is not limited in this application.

For example, in a HarmonyOS system, a shared implementation package may be referred to as an hsp package for short, and a shared interface package may be referred to as a har package for short. As shown in FIG. 2, the har package may include but is not limited to information about the hsp package on which an application depends and an API of the hsp package on which the application depends. The information about the hsp package on which the application depends includes but is not limited to an identifier of the hsp package on which the application depends or an identifier of the hsp package on which the application depends and a version number of the hsp package on which the application depends. The har package is used for integration of applications of the electronic device.

In some embodiments, the information about the hsp package on which the application depends may also be referred to as a configuration file of the har package, and the API of the hsp package on which the application depends may be referred to as an interface exposed by the har package.

In the following embodiments of this application, the hsp package and the har package in the HarmonyOS system are used as examples for description.

In a possible implementation, the hsp package may be preset on the electronic device. When no hsp package is preset on the electronic device, the electronic device may also download an hsp package of a shared function package from an application store server.

**Table 1**

| | |
|---|---|
| First shared function package | First har package |
| | First hsp package |
| Second shared function package | Second har package |
| | Second hsp package |

Table 1 shows an example of composition of two shared function packages. For example, the first shared function package may include the first har package and the first hsp package. The second shared function package may include the second har package and the second hsp package.

When an application needs to use a shared function package, a har package of the shared function package needs to be integrated into an installation package of the application.

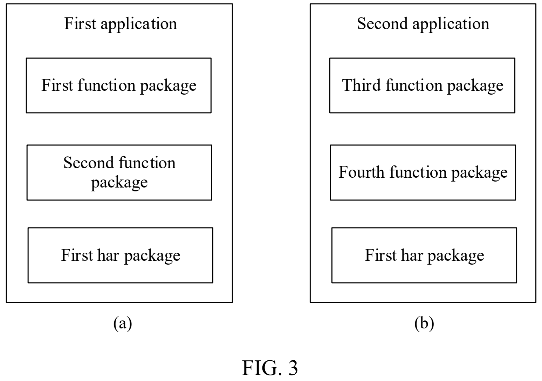

For example, as described in (a) in FIG. 3, when the third function package is a shared function package (for example, the first shared function package), the third function package may be not integrated into the installation package of the first application, but a first har package of the third function package is integrated. The first har package does not include a code file, and an amount of data of the first har package is small. In this way, an amount of data of the installation package of the first application can be reduced.

Similarly, as described in (b) in FIG. 3, the third function package may be not integrated into the installation package of the second application, but the first har package of the third function package is integrated. In this way, an amount of data of the installation package of the second application can be reduced.

Optionally, the application of the electronic device may alternatively integrate har packages of a plurality of shared function packages. For example, when the first application needs to use the second shared function package, the second har package of the second shared function package may be integrated into the installation package of the first application.

Optionally, when the application of the electronic device needs to use a plurality of shared function packages, for example, when the application of the electronic device needs to use the first shared function package and the second shared function package, the first har package of the first shared function package and the second har package of the second shared function package may be combined into one har package, and only one har package needs to be integrated into the installation package of the application of the electronic device.

In the following embodiments of this application, an example in which when the application of the electronic device uses a shared function package, the installation package of the application of the electronic device needs to include one har package corresponding to each shared function package is used for description.

### Hsp package download phase

An application download scenario in this application is first described.

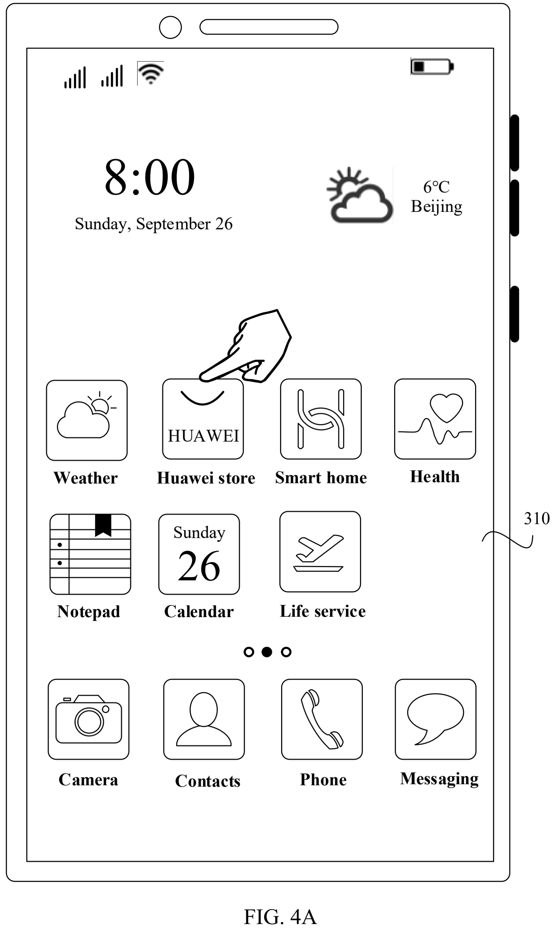

FIG. 4A to FIG. 4D are diagrams in which the electronic device 100 receives a user operation and downloads and installs a first application.

The electronic device 100 may receive the user operation to download an installation package of the first application from an application store, and install the first application based on the installation package of the first application. After the first application is installed on the electronic device 100, the electronic device 100 may display an application icon of the first application on a home screen.

For example, the first application may be a Huawei video application.

FIG. 4A shows a home screen 310 before the Huawei video application is installed on the electronic device 100. The home screen 310 includes icons of a plurality of applications, for example, an icon of a Weather application, an icon of a Huawei store application, an icon of a Smart home application, an icon of a Health application, an icon of a Memo application, an icon of a Calendar application, an icon of a Life service application, an icon of a Camera application, and an icon of a Contacts application, an icon of a Phone application, and an icon of a Messaging application. A battery level indicator, a weather indicator, a date indicator, a network signal indicator, a page indicator, and the like is further shown on the home screen 310.

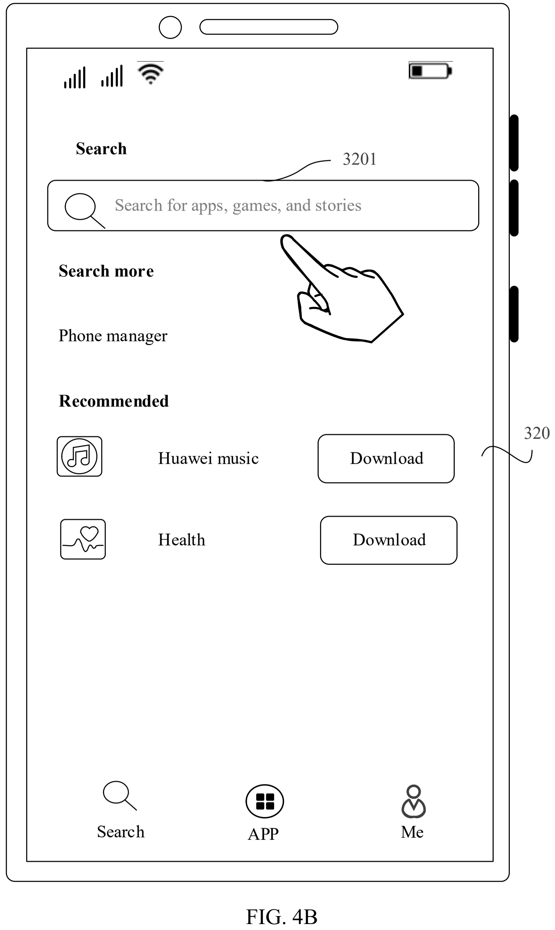

As shown in FIG. 4A, the electronic device 100 may receive an input operation (for example, a tap) performed by the user on the icon of the Huawei store application, and in response to the input operation performed by the user, the electronic device 100 may display a user interface 320 shown in FIG. 4B. The user interface 320 is a main interface of the Huawei store application. The user interface 320 includes an application search bar 3201 and a recommended application. The recommended application may be a Huawei music application, the Health application, or the like. The electronic device 100 may receive an input operation performed by the user on the search bar 3201 (for example, typing a keyword of an application in the search bar 3201), and then the electronic device 100 displays an application search interface.

For example, the electronic device 100 receives a keyword "Huawei video" typed by the user in the search bar, and then the electronic device 100 may display a download interface or a start interface of Huawei video. If the application 1 has been installed locally, in response to the keyword "Huawei video" typed by the user, the electronic device 100 displays a start interface of the application 1. The interface may include an icon of Huawei video, introduction information of Huawei video, a control for starting Huawei video, and the like.

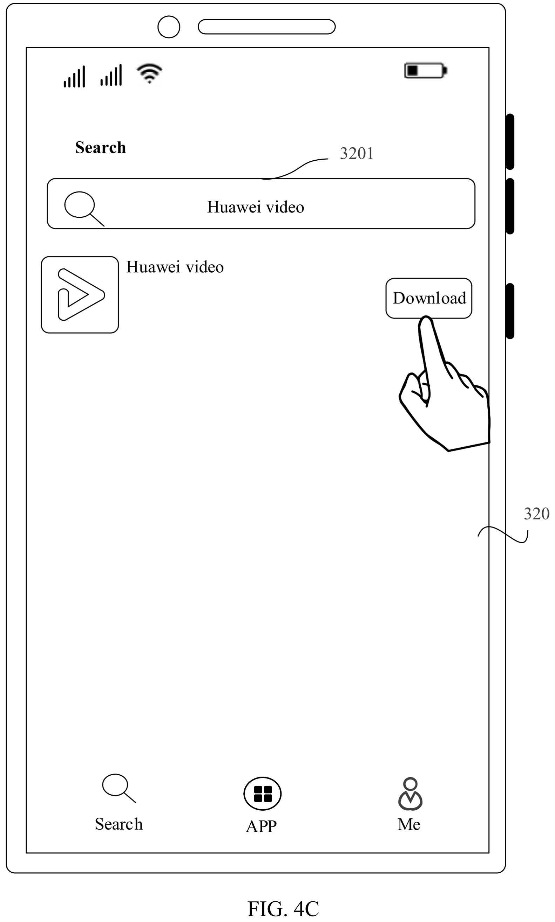

For example, as shown in FIG. 4C, the electronic device 100 receives the keyword "Huawei video" typed by the user in the search bar, and then the electronic device 100 may display the download interface of Huawei video. The download interface of Huawei video may include the icon of Huawei video, the introduction information of Huawei video, a download control of an installation package of Huawei video, and the like.

For example, as shown in FIG. 4C, the electronic device 100 may receive an input operation (for example, a tap) performed by the user on the download control of the installation package of Huawei video. In response to the input operation performed by the user, the electronic device 100 may download the installation package of the Huawei video application, and install the Huawei video application.

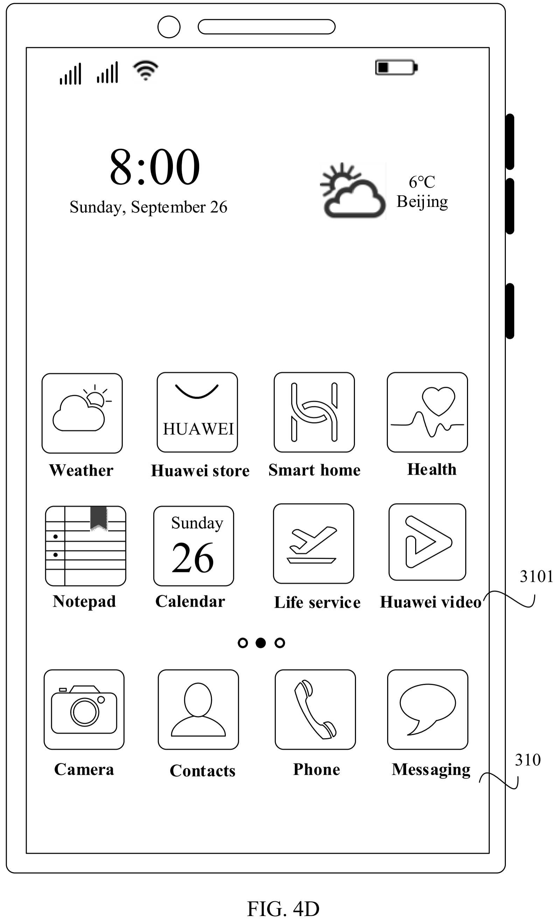

As shown in FIG. 4D, after the Huawei video application is installed on the electronic device 100, the electronic device 100 may display an icon 3101 of the Huawei video application on the home screen 310. The electronic device 100 may receive an input operation (for example, a tap) performed by the user on the icon 3101 of the Huawei video application on the home screen 310. In response to the input operation performed by the user, the electronic device 100 may display content of the Huawei video application, for example, play a video provided by the Huawei video application.

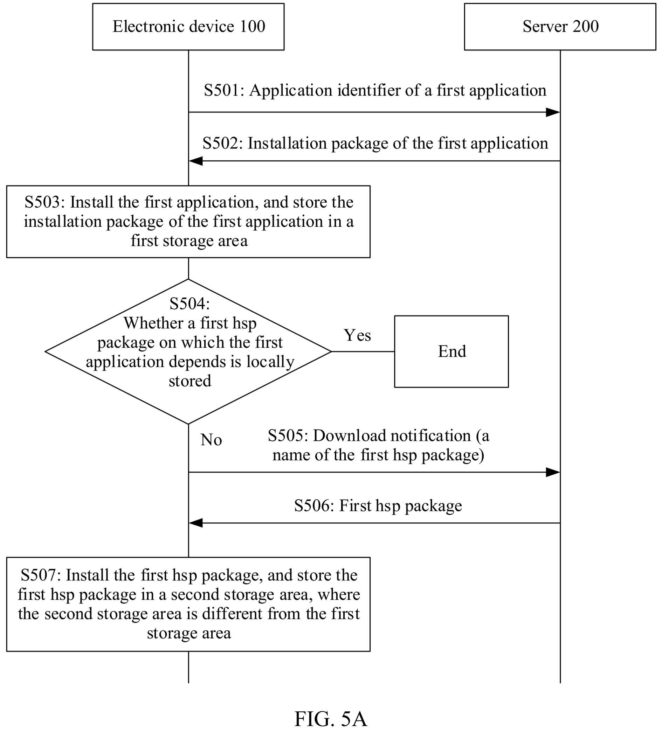

FIG. 5A is a diagram in which the electronic device 100 downloads an installation package of a first application.

S501: The electronic device 100 sends an application identifier of the first application to a server 200.

For example, the first application may be a Huawei video application.

As shown in FIG. 4A to FIG. 4D, when the electronic device 100 needs to download the first application, the electronic device 100 may receive the keyword "Huawei video" typed by the user in the search bar shown in FIG. 4C. Then, the electronic device 100 may receive the input operation (for example, a tap) of the user on the download control shown in FIG. 4C. In response to the input operation of the user, the electronic device 100 may send an application identifier "Huawei video" of the Huawei video application to the server 200.

S502: The electronic device 100 receives the installation package of the first application sent by the server 200.

In some embodiments, after the electronic device 100 sends the application identifier of the first application to the server 200, the server 200 may obtain the installation package of the first application based on the application identifier of the first application. Then, the server 200 sends the installation package of the first application to the electronic device 100.

The installation package of the first application may include one or more function packages.

The installation package of the first application may alternatively include one or more function packages and a har package of one or more shared function packages.

The function package may be a unique function package of the first application, and cannot be used by another application. An hsp package of the shared function package can be used by both the current application and another application.

S503: The electronic device 100 installs the first application, and stores the installation package of the first application in a first storage area of the electronic device 100.

After the electronic device 100 obtains the installation package of the first application sent by the server 200, the electronic device 100 may install the first application, and install the installation package of the first application in the first storage area of the electronic device 100. The installation package of the first application installed in the first storage area can be used only by the first application, and cannot be used by another application (for example, a second application).

A storage path of the installation package of the first application stored in the first storage area is a first storage path.

S504: The electronic device 100 needs to determine whether the electronic device 100 locally stores a first hsp package on which the first application depends.

When the electronic device 100 determines that the electronic device 100 locally stores the first hsp package on which the first application depends, the electronic device 100 does not need to download, from the server 200, the first hsp package on which the first application depends, and the procedure ends.

When the electronic device 100 determines that the electronic device 100 does not locally store the first hsp package on which the first application depends, the electronic device 100 needs to download, from the server 200, the first hsp package on which the first application depends, and perform S505.

Optionally, before performing S504, the electronic device 100 may determine whether the installation package of the first application includes the har package. When the electronic device 100 determines that the installation package of the first application does not include the har package, it indicates that the first application does not use the shared function package. After the electronic device 100 installs the first application and stores the installation package of the first application in the first storage area of the electronic device 100, the procedure ends, and the electronic device 100 does not need to perform S505.

When the electronic device 100 determines that the installation package of the first application includes the har package, it indicates that the first application needs to use the shared function package. After the electronic device 100 installs the first application and stores the installation package of the first application in the first storage area of the electronic device 100, the electronic device 100 further needs to perform S505.

When the electronic device 100 determines that the installation package of the first application includes the har package, for example, the har package is a first har package, the electronic device 100 may obtain the first har package. The electronic device 100 may obtain, from the first har package, information about the hsp package on which the first application depends, and then obtain, from the information about the hsp package on which the first application depends, a name or an ID of the first hsp package on which the first application depends. The information about the hsp package on which the first application depends may include the name or the ID of the hsp package on which the first application depends, or the name or the ID of the hsp package on which the first application depends and a version number of the hsp package on which the first application depends.

In embodiments of FIG. 5A, an example in which the information about the hsp package on which the first application depends includes the name or the ID of the hsp package on which the first application depends is used for description.

The electronic device 100 may obtain, based on the information about the hsp package on which the first application depends, the name or the ID of the first hsp package on which the first application depends, and determine, based on the name or the ID of the first hsp package, whether the electronic device 100 stores the first hsp package on which the first application depends.

S505: The electronic device 100 sends a download notification to the server 200.

When the electronic device 100 determines that the electronic device 100 does not locally store the first hsp package on which the first application depends, the electronic device 100 may send the download notification to the server 200. The download notification is used by the server 200 to download the first hsp package.

In a possible implementation, the download notification may carry the name or the ID of the first hsp package. In another possible implementation, the name of the first hsp package and the download notification may alternatively be separately sent to the server 200. This is not limited in this application.

S506: The electronic device 100 receives the first hsp package sent by the server 200.

In some embodiments, after receiving the download notification sent by the electronic device 100, in response to the download notification, the server 200 may obtain the name of the first hsp package, and obtain the first hsp package based on the name of the first hsp package. The server 200 then sends the first hsp package to the electronic device 100.

S507: The electronic device 100 installs the first hsp package, and stores the first hsp package in a second storage area, where the second storage area is different from the first storage area.

After the electronic device 100 obtains the first hsp package sent by the server 200, the electronic device 100 may install the first hsp package, and store the first hsp package in the second storage area. The second storage area is different from the first storage area. In this way, the first hsp package stored in the second storage area is not limited to being used by the first application, and may also be used by another application (for example, the second application).

Optionally, the electronic device 100 may store a plurality of hsp packages. To facilitate management of the plurality of hsp packages, the electronic device 100 may create an hsp package upper-level directory. The hsp package upper-level directory may include a plurality of hsp package subdirectories. Different hsp packages may be stored in different hsp package subdirectories. For example, when the electronic device 100 installs the first hsp package, the electronic device 100 may create a subdirectory (for example, a first hsp package subdirectory) of the hsp package upper-level directory, install the first hsp package, and store the first hsp package in the first hsp package subdirectory. For another example, when the electronic device 100 installs a second hsp package, the electronic device 100 may create a subdirectory (for example, a second hsp package subdirectory) of the hsp package upper-level directory, install the second hsp package, and store the second hsp package in the second hsp package subdirectory. The first hsp package subdirectory is different from the second hsp package subdirectory.

Optionally, in another embodiment, the electronic device 100 may alternatively not include an hsp package upper-level directory, but include only subdirectories of different hsp packages. This is not limited in this application either.

The first hsp package subdirectory may be referred to as the second storage area. A storage path of the first hsp package stored in the first hsp package subdirectory is the second storage path.

The second hsp package subdirectory may be referred to as a third storage area. A storage path of the first hsp package stored in the second hsp package subdirectory is a fifth storage path.

In some examples, non-hsp package applications may be mounted to each hap package subdirectory in the hsp package upper-level directory when needed, to implement a corresponding function.

Optionally, before the electronic device 100 installs the first hsp package, the electronic device 100 may verify whether the first hsp package is an installation package of the shared function package. In this way, security of the hsp package can be ensured. Specifically, when sending the first hsp package to the electronic device 100, the server 200 may further send a first check value to the electronic device 100. The electronic device 100 may locally obtain a second check value. When the first check value sent by the server 200 and the locally stored second check value are the same or meet a preset condition, the electronic device 100 may determine that the first hsp package is the installation package of the shared function package, and then, the electronic device 100 stores the first hsp package in the second storage area.

Optionally, after the electronic device 100 installs the first application, the electronic device 100 may obtain the first storage path of the installation package of the first application and the second storage path of the first hsp package, and store the first storage path of the installation package of the first application and the second storage path of the first hsp package in a package management module. In this way, when the electronic device 100 needs to use the first application, the electronic device 100 may directly obtain, from the package management module, the first storage path of the installation package of the first application and the second storage path of the first hsp package, to improve a startup speed of the first application.

Optionally, S503 and S507 may alternatively be simultaneously performed.

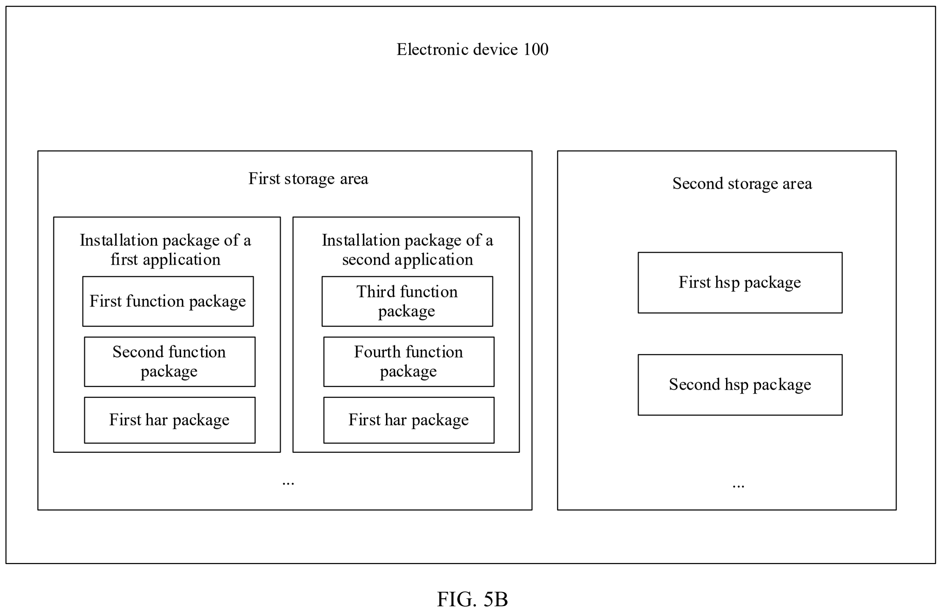

FIG. 5B is a diagram in which the electronic device 100 stores an hsp package and an application installation package.

As shown in FIG. 5B, an installation package of each application is stored in the first storage area, and the installation package of the application includes a function package of the application and a har package of a shared function package on which the application depends. For example, the installation package of the first application and the installation package of the second application are stored in the first storage area. The installation package of the first application includes a first function package, a second function package, and the first har package. The installation package of the second application includes a third function package, a fourth function package, and the first har package.

An hsp package of the shared function package on which the application depends, for example, a first hsp package of a first shared function package and a second hsp package of a second shared function package, is stored in the second storage area.

In some embodiments, in addition to the name or the ID of the hsp package on which the first application depends, the information about the hsp package on which the first application depends may include the version number of the hsp package on which the first application depends.

**In this case, the electronic device 100 needs to determine whether the electronic device 100 locally stores the hsp package on which the first application depends, and needs to determine whether a version number of the hsp package is the same as the version number of the hsp package on which the first application depends.**

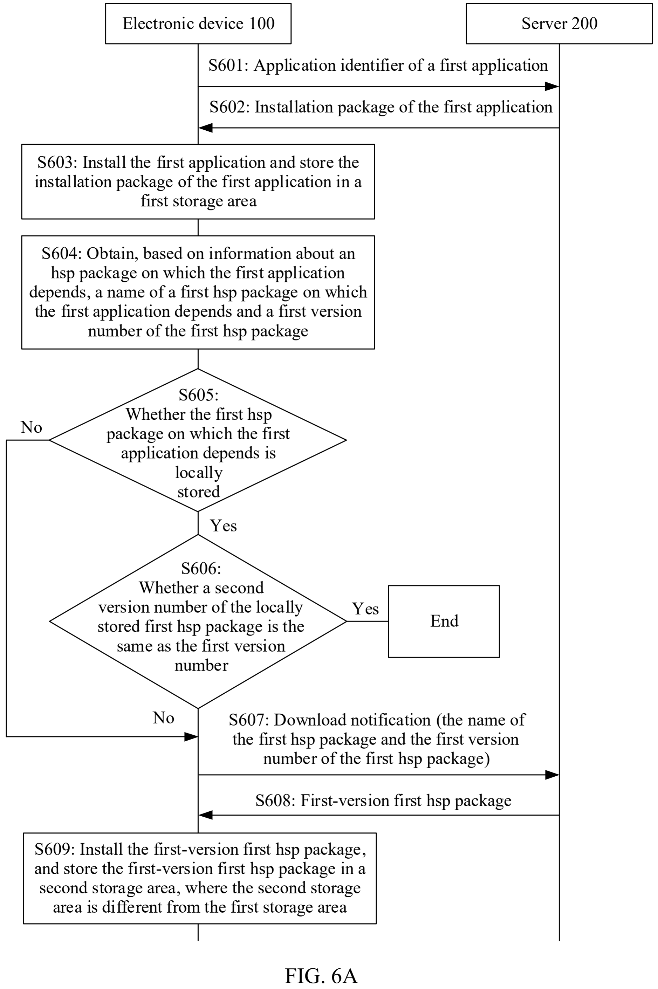

**FIG. 6A** **is another diagram in which the electronic device 100 downloads an installation package of a first application.**

For S601 to S603, refer to the descriptions in S501 to S503. Details are not described herein again in this application.

S604: The electronic device 100 obtains, based on information about an hsp package on which the first application depends, a name of the first hsp package on which the first application depends and a first version number of the first hsp package.

S605: The electronic device 100 needs to determine whether the electronic device 100 locally stores the first hsp package on which the first application depends.

In some examples, the electronic device 100 may obtain a first har package from the installation package of the first application. The first har package may include the information about the hsp package on which the first application depends and an API of the hsp package on which the first application depends.

The information about the hsp package on which the first application depends may include the name of the first hsp package on which the first application depends and the version number of the first hsp package on which the first application depends.

After obtaining the first har package, the electronic device 100 may obtain, from the first har package, the information about the first hsp package on which the first application depends, and then, obtain the name of the first hsp package on which the first application depends and the first version number of the first hsp package based on the information about the first hsp package on which the first application depends.

After obtaining the name of the first hsp package on which the first application depends, the electronic device 100 may determine, based on the name of the first hsp package, whether the electronic device 100 stores the first hsp package on which the first application depends.

When the electronic device 100 determines that the electronic device 100 locally stores the first hsp package on which the first application depends, the electronic device 100 further needs to determine whether a version number of the first hsp package locally stored in the electronic device 100 is the same as the version number of the first hsp package recorded in the first har package, and perform S606.

When the electronic device 100 determines that the electronic device 100 does not locally store the first hsp package on which the first application depends, the electronic device 100 needs to download, from the server 200, a first-version first hsp package on which the first application depends, and perform S607.

S606: The electronic device 100 needs to determine whether a second version number of the first hsp package locally stored in the electronic device 100 is the same as the first version number.

A function feature of a shared function package may be updated. After the function feature of the shared function package is updated, a version number of the shared function package also needs to be updated. The electronic device 100 needs to determine whether the second version number of the first hsp package locally stored in the electronic device 100 is the same as the first version number.

When the second version number of the first hsp package locally stored in the electronic device 100 is the same as the first version number, the electronic device 100 does not need to download the first-version first hsp package from the server 200, and the procedure ends.

When the second version number of the first hsp package locally stored in the electronic device 100 is different from the first version number, the electronic device 100 needs to download the first-version first hsp package from the server 200, and perform S607. In some examples, if the first version number is later than the second version number, the first hsp package of the second version number may be updated to the first-version first hsp package.

S607: The electronic device 100 sends a download notification to the server 200.

When the electronic device 100 determines that the second version number of the first hsp package locally stored in the electronic device 100 is different from the first version number, the electronic device 100 may send the download notification to the server 200. The download notification is used by the server 200 to download the first-version first hsp package.

In a possible implementation, the download notification may carry the name of the first hsp package and the first version number of the first hsp package. In another possible implementation, the name of the first hsp package, the first version number of the first hsp package, and the download notification may alternatively be separately sent to the server 200. This is not limited in this application.

S608: The electronic device 100 receives the first-version first hsp package sent by the server 200.

In some embodiments, the electronic device 100 may send the download notification to the server 200. After the server 200 receives the download notification, the server 200 may obtain the name of the first hsp package and the first version number of the first hsp package, and obtain the first-version first hsp package based on the name of the first hsp package and the first version number of the first hsp package.

S609: The electronic device 100 installs the first-version first hsp package, and stores the first-version first hsp package in a second storage area, where the second storage area is different from a first storage area.

After the electronic device 100 obtains the first-version first hsp package sent by the server 200, the electronic device 100 may install the first-version first hsp package, and store the first-version first hsp package in the second storage area. The second storage area is different from the first storage area. In this way, the first-version first hsp package stored in the second storage area is not limited to being used by the first application, and may also be used by another application (for example, a second application).

A storage path of the first-version first hsp package stored in the second storage area is a second storage path.

Optionally, before the electronic device 100 stores the first-version first hsp package in the second storage area, the electronic device 100 may verify whether the first-version first hsp package is an installation package of the shared function package. In this way, security of the hsp package can be ensured. Specifically, when sending the first-version first hsp package to the electronic device 100, the server 200 may further send a third check value to the electronic device 100. The electronic device 100 may locally obtain a second check value. When the third check value sent by the server 200 and the locally stored second check value are the same or meet a preset condition, the electronic device 100 may determine that the first-version first hsp package is the installation package of the shared function package, and then, the electronic device 100 stores the first-version first hsp package in the second storage area.

Optionally, after the electronic device 100 installs the first-version first hsp package and stores the first-version first hsp package in the second storage area, the electronic device 100 may obtain a first storage path of the installation package of the first application and the second storage path of the first-version first hsp package, and store the first storage path of the installation package of the first application and the second storage path of the first-version first hsp package in a package management module. In this way, when the electronic device 100 needs to use the first application, the electronic device 100 may obtain, from the package management module, the first storage path of the installation package of the first application and the second storage path of the first-version first hsp package, to improve a startup speed of the first application.

Optionally, S604 and S609 may alternatively be simultaneously performed.

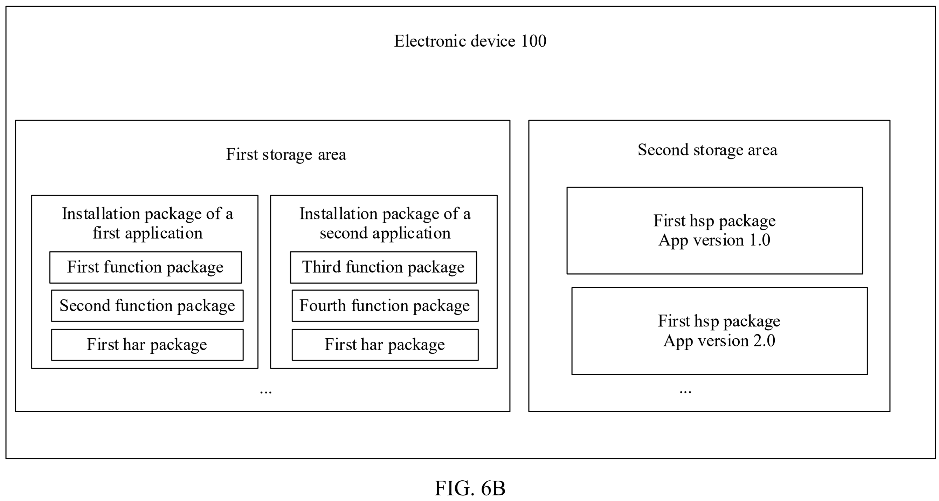

FIG. 6B is another diagram in which the electronic device 100 stores an hsp package and an application installation package.

As shown in FIG. 6B, an installation package of each application is stored in the first storage area, and the installation package of the application includes a function package of the application and a har package of a shared function package on which the application depends. For example, the installation package of the first application and an installation package of the second application are stored in the first storage area. The installation package of the first application includes a first function package, a second function package, and the first har package. The installation package of the second application includes a third function package, a fourth function package, and the first har package.

An installation package of the shared function package, for example, a first-version first hsp package of a first shared function package or a second-version first hsp package of the first shared function package is stored in the second storage area. For example, the first version number may be app version 1.0, and the second version number may be app version 2.0.

### Update and deletion of an hsp package

After storing the hsp package in a second storage area, the electronic device 100 may manage the hsp package, for example, update or delete the hsp package.

1. The server 200 may automatically send, to the electronic device 100, an hsp package whose use frequency is greater than a preset value.

The server 200 stores a plurality of hsp packages therein. Different electronic devices may download the plurality of hsp packages from the server 200. The server 200 may collect statistics on a use frequency of each hsp package, determine the hsp package whose use frequency is greater than the preset value, and automatically send the hsp package whose use frequency is greater than the preset value to each electronic device.

For example, after the server 200 determines that a use frequency of a first hsp package or a first-version first hsp package is greater than the preset value, the server 200 may send the first hsp package or the first-version first hsp package to the electronic device 100. The electronic device 100 may store the first hsp package or the first-version first hsp package in the second storage area. In this way, when the electronic device 100 receives a user operation of downloading a first application, the first application depends on the first hsp package or the first-version first hsp package. The electronic device 100 may not need to download the first hsp package or the first-version first hsp package from the server 200, and only needs to download an installation package of the first application. Therefore, a speed of downloading and installing the first application by the electronic device 100 can be increased.

2. After a version of the hsp package is updated, the server 200 may automatically send a latest-version hsp package to the electronic device 100.

The hsp package stored in the server 200 has a version number. After the hsp package is updated, the version number of the hsp package needs to be updated accordingly. The server 200 may automatically send the hsp package with an updated version number to each electronic device.

For example, the server 200 stores a second-version first hsp package. After the second-version first hsp package is updated, the first-version first hsp package may be obtained. The server 200 may automatically send the first-version first hsp package to the electronic device 100. In this way, when the electronic device 100 receives a user operation of downloading the first application, the first application depends on the first-version first hsp package. The electronic device 100 may not need to download the first-version first hsp package from the server 200, and only needs to download the installation package of the first application. A speed of downloading and installing the first application by the electronic device 100 can be increased.

3. The electronic device 100 may further automatically delete an hsp package that is not used for more than first duration.

The electronic device 100 stores a plurality of hsp packages. These hsp packages may be downloaded by the electronic device 100 from the server 200 when the electronic device 100 downloads an application. Alternatively, these hsp packages may be preset in a system. Alternatively, these hsp packages may be automatically sent by the server 200 to the electronic device 100. Alternatively, these hsp packages may be periodically/irregularly downloaded from the server 200 by the electronic device 100 in response to an automatic update request set by a user.

The electronic device 100 may collect statistics on use frequencies of the plurality of hsp packages stored in the electronic device 100. The hsp package that is not used for more than the first duration is deleted, to save storage space of the electronic device 100.

For example, the electronic device 100 stores the first-version first hsp package and the second-version first hsp package. If the electronic device 100 determines that the second-version first hsp package is not used for more than the first duration, the electronic device 100 may delete the second-version first hsp package, to save storage space of the electronic device 100.

### Hsp package usage phase

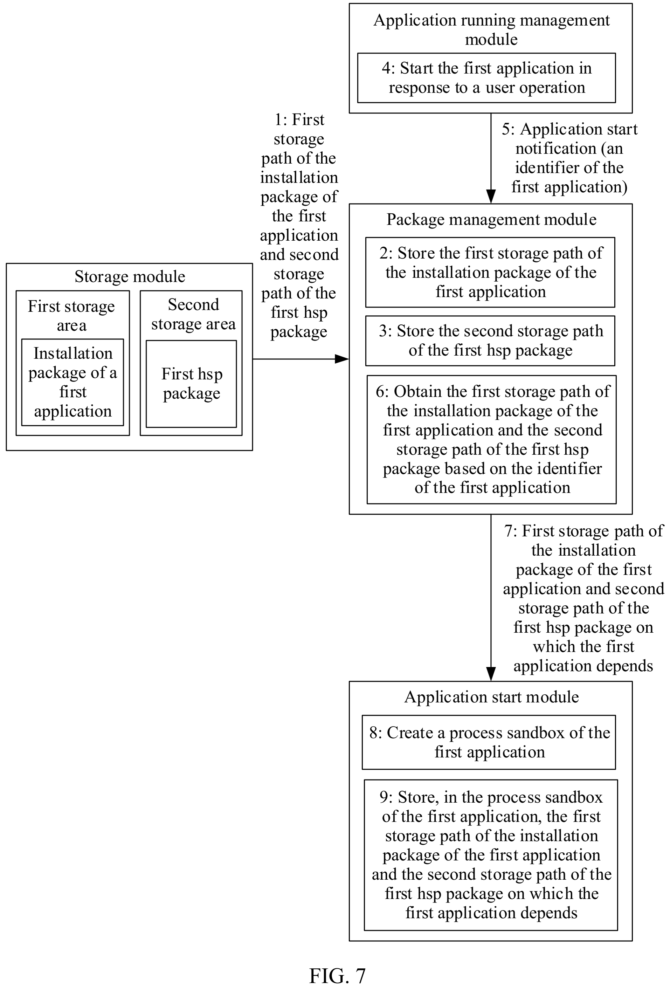

FIG. 7 is a diagram of interaction between function modules for running an hsp package.

As shown in FIG. 7, the function modules include but are not limited to a storage module, a package management module, an application running management module, an application startup (app spawn) module, and the like.

The storage module is configured to store an installation package of an application and an hsp package on which the application depends.

The installation package of the application is stored in a first storage area in the storage module. The hsp package on which the application depends is stored in a second storage area in the storage module.

For example, as shown in FIG. 7, an installation package of a first application is stored in the first storage area. A first hsp package on which the first application depends is stored in the second storage area.

The storage module is further configured to send a first storage path of the installation package of the first application and a second storage path of the first hsp package to the package management module.

The package management module is further configured to store the first storage path of the installation package of the first application and the second storage path of the first hsp package.

The application running management module is configured to start the first application in response to a user operation.

The application running management module is further configured to send an application start notification to the package management module.

In a possible implementation, the application start notification may carry an identifier of the first application. In another possible implementation, the identifier of the first application may alternatively be sent to the package management module independently of the application start notification. This is not limited in this application.

The package management module is further configured to: in response to the application start notification, obtain the first storage path of the installation package of the first application and the second storage path of the first hsp package based on the identifier of the first application.

In a possible implementation, after receiving the application start notification sent by the application running management module, the package management module may obtain the first storage path of the installation package of the first application based on the identifier of the first application, obtain the installation package of the first application, determine an identifier that is of the first hsp package on which the first application depends and that is recorded in the installation package of the first application, and then, obtain the second storage path of the first hsp package based on the identifier of the first hsp package.

In another possible implementation, the package management module may bind and store the first storage path of the installation package of the first application and the second storage path of the first hsp package on which the first application depends in advance. Then, after receiving the application start notification sent by the application running management module, the package management module may directly obtain the first storage path of the installation package of the first application and the second storage path of the first hsp package based on the identifier of the first application, to reduce time for the package management module to search for the second storage path of the first hsp package on which the first application depends, and increase a startup speed of the application.

The package management module is further configured to: after obtaining the first storage path of the installation package of the first application and the second storage path of the first hsp package on which the first application depends, send, to an application startup module, the first storage path of the installation package of the first application and the second storage path of the first hsp package on which the first application depends.

The application startup module is configured to: receive the first storage path of the installation package of the first application and the second storage path of the first hsp package on which the first application depends that are sent by the package management module, and create a process sandbox of the first application.

The application startup module is further configured to store, in the process sandbox of the first application, the first storage path of the installation package of the first application and the second storage path of the first hsp package on which the first application depends.

In this way, after the first application is run, the installation package of the first application and the first hsp package on which the first application depends may be obtained based on the first storage path of the installation package of the first application and the second storage path of the first hsp package on which the first application depends that are in the process sandbox of the first application, and the installation package of the first application and the first hsp package on which the first application depends are run, to implement a function feature of the first application.

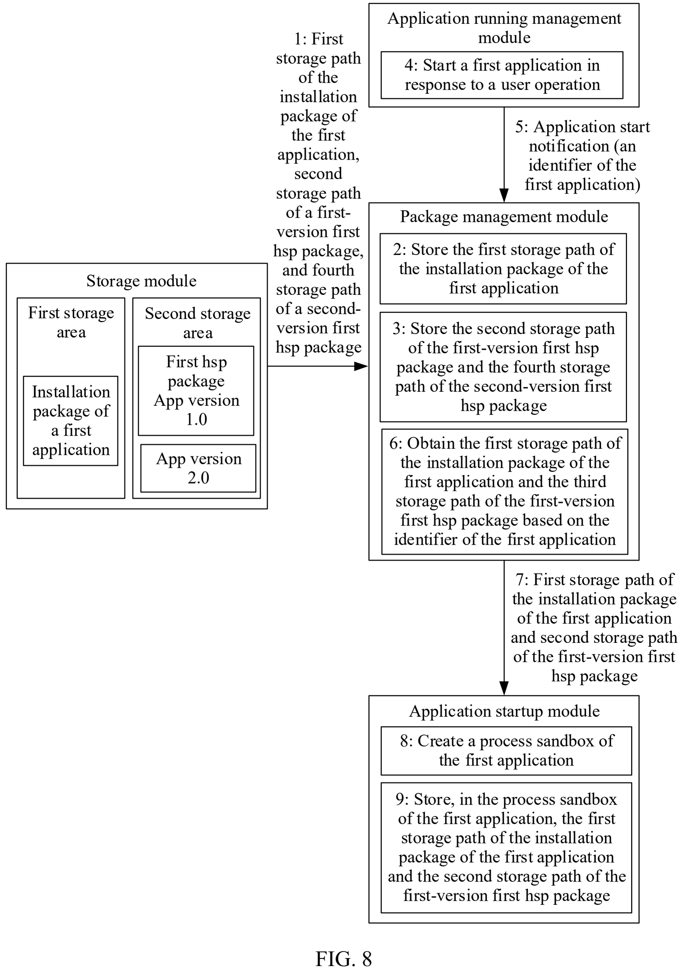

FIG. 8 is another diagram of interaction between function modules for running an hsp package.

Embodiments corresponding to FIG. 8 are similar to embodiments corresponding to FIG. 7. A difference lies in that, in embodiments of FIG. 8, version numbers of a hsp package need to be distinguished.

A storage module is configured to store an installation package of an application and an hsp package on which the application depends.

As shown in FIG. 8, the installation package of the application is stored in a first storage area in the storage module. The hsp package on which the application depends is stored in a second storage area in the storage module.

For example, an installation package of a first application is stored in the first storage area. A first-version first hsp package and a second-version first hsp package are stored in the second storage area. For example, a first version number may be app version 1.0, and a second version number may be app version 2.0.

The storage module is further configured to send a first storage path of the installation package of the first application, a second storage path of the first-version first hsp package, and a fourth storage path of the second-version first hsp package to a package management module.

The package management module is further configured to store the first storage path of the installation package of the first application, the second storage path of the first-version first hsp package, and the fourth storage path of the second-version first hsp package.

An application running management module is configured to start the first application in response to a user operation.

The application running management module is further configured to send an application start notification to the package management module.

In a possible implementation, the application start notification may carry an identifier of the first application. In another possible implementation, the identifier of the first application may alternatively be sent to the package management module independently of the application start notification. This is not limited in this application.

The package management module is further configured to: in response to the application start notification, obtain the first storage path of the installation package of the first application and the second storage path of the first-version first hsp package based on the identifier of the first application.

In a possible implementation, after receiving the application start notification sent by the application running management module, the package management module may obtain the first storage path of the installation package of the first application based on the identifier of the first application, obtain the installation package of the first application, determine an identifier that is of the first-version first hsp package on which the first application depends and that is recorded in the installation package of the first application, and then, obtain the second storage path of the first-version first hsp package based on the identifier of the first-version first hsp package.

In another possible implementation, the package management module may bind and store the first storage path of the installation package of the first application and the second storage path of the first-version first hsp package on which the first application depends in advance. Then, after receiving the application start notification sent by the application running management module, the package management module may directly obtain the first storage path of the installation package of the first application and the second storage path of the first-version first hsp package based on the identifier of the first application, to reduce time for the package management module to search for the second storage path of the first-version first hsp package on which the first application depends, and increase a startup speed of the application.

The package management module is further configured to: after obtaining the first storage path of the installation package of the first application and the second storage path of the first hsp package on which the first application depends, send, to an application startup module, the first storage path of the installation package of the first application and the second storage path of the first-version first hsp package.

The application startup module is configured to: receive the first storage path of the installation package of the first application and the second storage path of the first-version first hsp package that are sent by the package management module, and create a process sandbox of the first application.

The application startup module is further configured to store, in the process sandbox of the first application, the first storage path of the installation package of the first application and the second storage path of the first-version first hsp package.

In this way, after the first application is run, the installation package of the first application and the first-version first hsp package on which the first application depends may be obtained based on the first storage path of the installation package of the first application and the second storage path of the first-version first hsp package on which the first application depends that are in the process sandbox of the first application, and the installation package of the first application and the first-version first hsp package on which the first application depends are run, to implement a function feature of the first application.

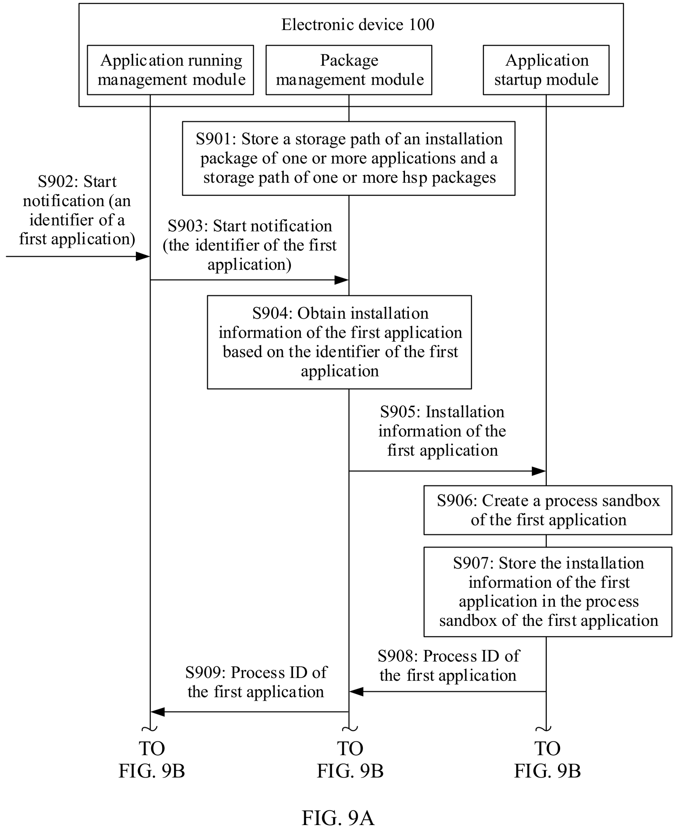

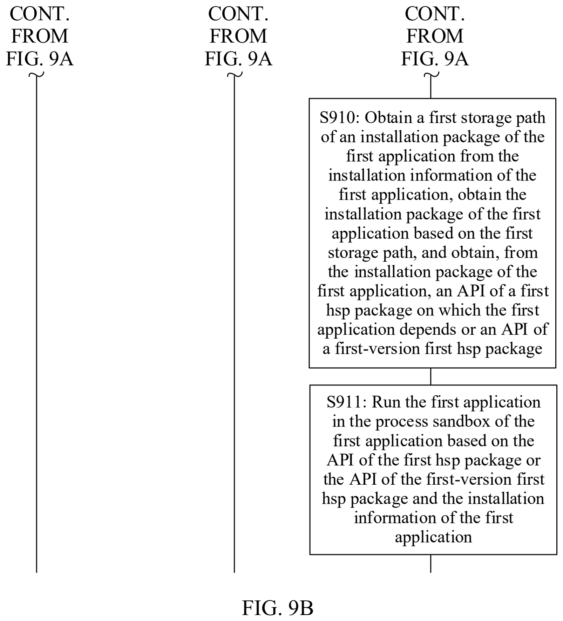

FIG. 9A and FIG. 9B are a schematic flowchart of a method for running a first application.

S901: A package management module stores a storage path of an installation package of one or more applications and a storage path of one or more hsp packages.

A storage area of the installation package of the application is different from a storage area of the hsp package. For example, the installation package of the application may be stored in a first storage area, and the hsp package may be stored in a second storage area. The first storage area is different from the second storage area.

**Table 2**

| Identifier of an application | Storage path of an installation package of the application |
|---|---|
| First application | First storage path |
| Second application | Third storage path |

Table 2 shows a manner in which the package management module stores storage paths of installation packages of applications. The storage paths of the installation packages of the applications are stored in a one-to-one correspondence with identifiers of the applications. The electronic device 100 may obtain the storage paths of the installation packages of the applications based on the identifiers of the applications.

For example, the electronic device 100 may learn, based on an application identifier of the first application, that a storage path of an installation package of the first application is the first storage path. The electronic device 100 may learn, based on an application identifier of the second application, that a storage path of an installation package of the second application is the third storage path.

**Table 3**

| Identifier of an hsp package | Storage path of the hsp package |
|---|---|
| First hsp package | Second storage path |
| Second hsp package | Fifth storage path |

Table 3 shows a manner in which the package management module stores storage paths of hsp packages. The storage paths of the hsp packages are stored in a one-to-one correspondence with identifiers of the hsp packages. The electronic device 100 may obtain the storage paths of the hsp packages based on the identifiers of the hsp packages.

For example, the electronic device 100 may learn, based on an hsp package identifier of the first hsp package, that a storage path of the first hsp package is the second storage path. The electronic device 100 may learn, based on an hsp package identifier of the second hsp package, that a storage path of the second hsp package is the fifth storage path.

**Table 4**

| Identifier of an hsp package | Version number of the hsp package | Storage path of the hsp package |
|---|---|---|
| First hsp package | First version number | Second storage path |
| First hsp package | Second version number | Fourth storage path |

Table 4 shows another manner in which the package management module stores storage paths of hsp packages. A difference between Table 4 and Table 3 lies in that, in Table 4, version numbers of hsp packages stored in the electronic device 100 further need to be distinguished. The storage paths of the hsp packages are stored in a one-to-one correspondence with identifiers of the hsp packages and the identifiers of the hsp packages. The electronic device 100 may obtain the storage paths of the hsp packages based on the identifiers of the hsp packages and the version numbers of the hsp packages.

For example, the electronic device 100 may learn, based on an hsp package identifier of the first hsp package and the first version number of the first hsp package, that a storage path of a first-version first hsp package is the second storage path. The electronic device 100 may learn, based on the hsp package identifier of the first hsp package and the second version number of the first hsp package, that a storage path of a second-version first hsp package is the fourth storage path.

In a possible implementation, the package management module may alternatively not store the storage path of the installation package of the one or more applications and the storage path of the one or more hsp packages. Alternatively, in addition to storing the storage path of the installation package of the one or more applications and the storage path of the one or more hsp packages, the package management module may store installation information of the application. The installation information of the application records the storage path of the installation package of the application and a storage path of an hsp package on which the application depends.

**Table 5**

| Identifier of an application | Installation information of the application |
|---|---|
| First application | First storage path of an installation package of the first application and second storage path of a first hsp package on which the first application depends |
| Second application | Third storage path of an installation package of the second application and second storage path of a first hsp package on which the second application depends |

Table 5 shows a manner in which the package management module stores installation information of applications. The installation information of the applications is stored in a one-to-one correspondence with identifiers of the applications. The electronic device 100 may obtain the installation information of the applications based on the identifiers of the applications.

For example, the electronic device 100 may obtain installation information of the first application based on an application identifier of the first application. The installation information of the first application may include the first storage path of the installation package of the first application and the second storage path of the first hsp package on which the first application depends.

The electronic device 100 may also obtain installation information of the second application based on an application identifier of the second application. The installation information of the second application may include the third storage path of the installation package of the second application and the second storage path of the first hsp package on which the second application depends.

The package management module may further store installation information of more other applications. This is not limited in this application.

**Table 6**

| Identifier of an application | Installation information of the application |
|---|---|
| First application | First storage path of an installation package of the first application and second storage path of a first-version first hsp package on which the first application depends |
| Second application | Third storage path of an installation package of the second application and second storage path of a first-version first hsp package on which the second application depends |

Table 6 shows another manner in which the package management module stores installation information of applications. The installation information of the applications is stored in a one-to-one correspondence with identifiers of the applications. The electronic device 100 may obtain the installation information of the applications based on the identifiers of the applications.

A difference between Table 6 and Table 5 lies in that, in Table 5, version numbers of hsp packages stored in the electronic device 100 further need to be distinguished.

For example, the electronic device 100 may obtain installation information of the first application based on an application identifier of the first application. The installation information of the first application may include the first storage path of the installation package of the first application and the second storage path of the first-version first hsp package on which the first application depends.

The electronic device 100 may also obtain installation information of the second application based on an application identifier of the second application. The installation information of the second application may include the third storage path of the installation package of the second application and the second storage path of the first-version first hsp package on which the second application depends.

The package management module may further store installation information of more other applications. This is not limited in this application.

S902: An application running management module obtains a start notification.

The electronic device 100 may receive an operation of a user, and start the first application.

For example, the first application may be a Huawei video application, and an operation of starting the first application may be an input operation (for example, a tap) on the icon 3101 of the Huawei video application shown in FIG. 4D.

In response to the operation of the user, the application running management module may obtain the start notification, where the start notification is used to start the first application.

When the application running management module obtains the start notification, the application running management module may further obtain the identifier of the first application.

In a possible implementation, the identifier of the first application may be carried in the start notification and sent to the application running management module.

In another possible implementation, the identifier of the first application may alternatively be sent to the application running management module independently of the start notification. This is not limited in this application.

S903: The application running management module sends the start notification to the package management module.

Similarly, the application running management module further needs to send the identifier of the first application to the package management module.

In a possible implementation, the identifier of the first application may be carried in the start notification and sent to the package management module.

In another possible implementation, the identifier of the first application may alternatively be sent to the package management module independently of the start notification. This is not limited in this application.

S904: The package management module obtains installation information of the first application based on the identifier of the first application.

After obtaining the start notification and the identifier of the first application that are sent by the application running management module, the package management module may obtain, in response to the start notification, the installation information of the first application based on the identifier of the first application.

It can be learned from S901 that, in some embodiments, the package management module stores installation information of a plurality of applications, and the package management module may directly obtain the installation information of the first application from Table 5 or Table 6 based on the identifier of the first application. For example, the installation information of the first application may include the first storage path of the installation package of the first application and the second storage path of the first hsp package on which the first application depends. For example, the installation information of the first application may alternatively include the first storage path of the installation package of the first application and the second storage path of the first-version first hsp package on which the first application depends.

In another embodiment, the package management module does not store the installation information of the plurality of applications. The package management module may obtain, based on the identifier of the first application, the installation information of the first application from the storage path of the installation package of the one or more applications and the storage path of the one or more hsp packages that are stored in the package management module. Specifically, the package management module may obtain the first storage path of the installation package of the first application from Table 2 based on the identifier of the first application. Then, the installation package of the first application is obtained based on the first storage path of the installation package of the first application, and the package management module may obtain, from the installation package of the first application, information about an hsp package on which the first application depends.

In a possible implementation, the information about the hsp package on which the first application depends may include an identifier (for example, the first hsp package) of the hsp package on which the first application depends. The package management module may obtain the second storage path of the first hsp package from Table 3 based on an identifier of the first hsp package. The package management module may then generate the installation information of the first application based on the first storage path of the installation package of the first application and the second storage path of the first hsp package.

In another possible implementation, the information about the hsp package on which the first application depends may include the identifier (for example, the first hsp package) and a version number (for example, the first version number) that are of the hsp package on which the first application depends. The package management module may obtain the second storage path of the first-version first hsp package from Table 4 based on the identifier and the first version number that are of the first hsp package. The package management module may then generate the installation information of the first application based on the first storage path of the installation package of the first application and the second storage path of the first-version first hsp package.

Optionally, the hsp package stored in the electronic device 100 may be updated. For example, the hsp package may be deleted if it is not used for a long time. In this case, before S904 is performed, the package management module may determine whether the hsp package on which the first application depends exists. When the hsp package does not exist, the package management module may download, from the server 200, the hsp package on which the first application depends. In this way, a case in which the first application fails to be started because the hsp package on which the first application depends is deleted can be avoided.

S905: The package management module sends the installation information of the first application to an application startup module.

After the package management module obtains the installation information of the first application, the package management module sends the installation information of the first application to the application startup module, so that the application startup module can start the first application based on the installation information of the first application.

S906: The application startup module creates a process sandbox of the first application.

S907: The application startup module stores the installation information of the first application in the process sandbox of the first application.

Before the first application is started, the application startup module needs to create the process sandbox of the first application, and store/mount the installation information of the first application sent by the package management module in the process sandbox of the first application. In this way, only the first application can access information in the process sandbox of the first application, and another application process cannot access the information in the process sandbox of the first application. This ensures security of running a process.

S908: The application startup module sends a process ID of the first application to the package management module.

S909: The package management module sends the process ID of the first application to the application startup module.

After creating the process sandbox of the first application, the application startup module may obtain the process ID of the first application, and send the process ID of the first application to the package management module. After receiving the process ID of the first application sent by the application startup module, the package management module sends the process ID of the first application to the application startup module. In this way, the application startup module may notify the package management module and the application startup module that the first application has been started.

S910: The application startup module obtains the first storage path of the installation package of the first application from the installation information of the first application, obtains the installation package of the first application based on the first storage path, and obtains, from the installation package of the first application, an API of the first hsp package on which the first application depends or an API of the first-version first hsp package.

The API of the first hsp package may include one or more APIs. The electronic device may export the first hsp package based on the API of the first hsp package, and then load and run the first hsp package.

S911: The application startup module runs the first application in the process sandbox of the first application based on the API of the first hsp package or the API of the first-version first hsp package and the installation information of the first application.

After the first application is started, if the first application needs to use the hsp package, the application startup module may obtain the first storage path of the installation package of the first application from the installation information of the first application, and obtain the installation package of the first application based on the first storage path. The application startup module may obtain, from the installation package of the first application, the API of the first hsp package on which the first application depends or the API of the first-version first hsp package on which the first application depends. Then, the application startup module runs the first application based on the API of the first hsp package, the second storage path of the first hsp package in the process sandbox of the first application, and the first storage path of the installation package of the first application in the process sandbox of the first application. Alternatively, then, the application startup module runs the first application based on the API of the first-version first hsp package, the second storage path of the first-version first hsp package in the process sandbox of the first application, and the first storage path of the installation package of the first application in the process sandbox of the first application. In this way, a preset function of the hsp package is implemented through the API that is of the hsp package and that is recorded in the installation package of the first application.

The following describes how the application startup module runs the first application.

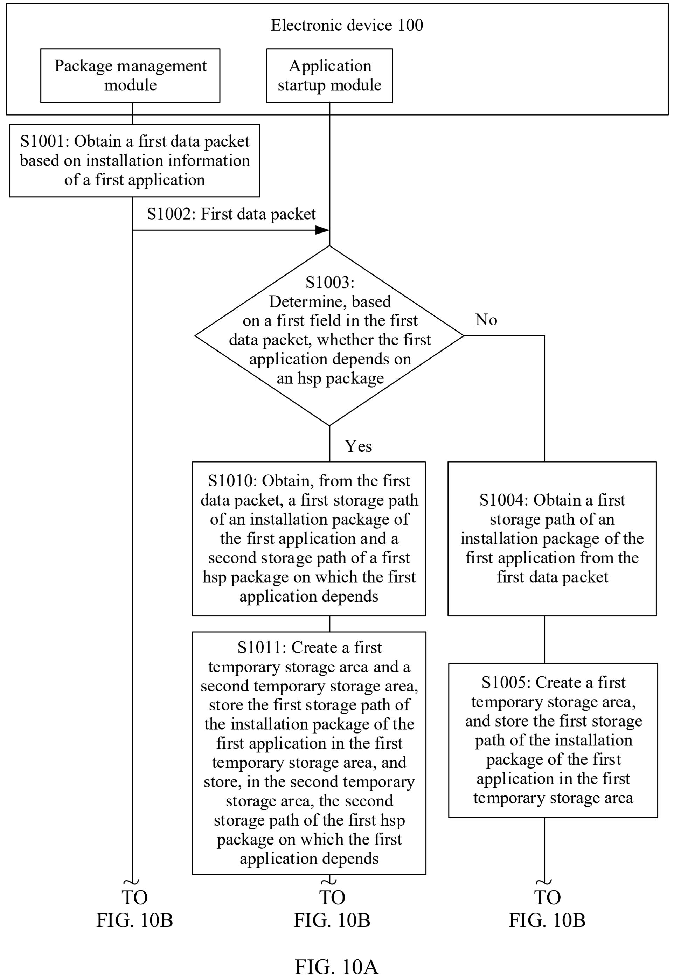

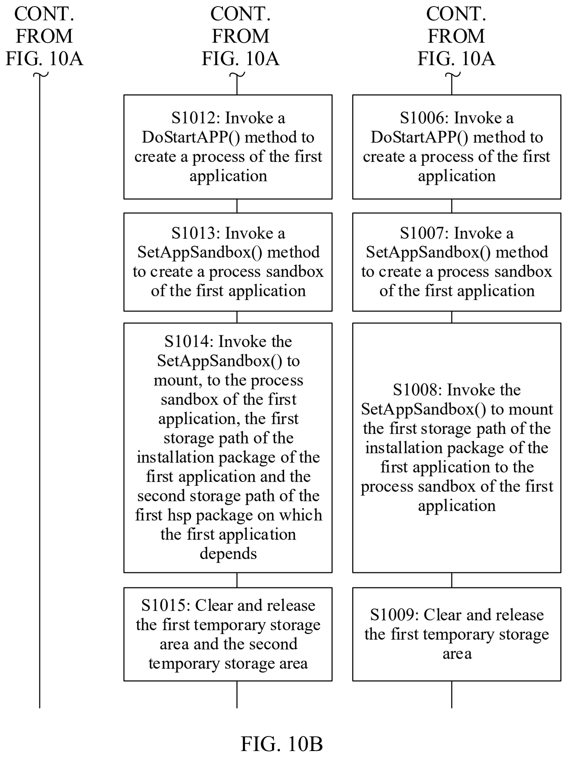

FIG. 10A and FIG. 10B are a diagram of running a first application by an application startup module.

S1001: A package management module obtains a first data packet based on installation information of the first application.

S1002: The package management module sends the first data packet to the application startup module.

For example, the installation information of the first application may include a first storage path of an installation package of the first application.

For example, the installation information of the first application may include the first storage path of the installation package of the first application and a second storage path of a first hsp package on which the first application depends.

For example, the installation information of the first application may alternatively include the first storage path of the installation package of the first application and a second storage path of a first-version first hsp package on which the first application depends.

The package management module may obtain the first data packet based on the installation information of the first application, and send the installation information of the first application to the application startup module through the first data packet.

The first data packet may include a first field, and a value of the first field indicates whether the first application depends on an hsp package.

For example, the first field may be an HspList.totalLength field. If a value of the HspList.totalLength field is 1, it indicates that the first application depends on an hsp package. If the value of the HspList.totalLength field is 0, it indicates that the first application does not depend on an hsp package.

When the first application depends on the hsp package, the first data packet may identify a unique hsp package through a plurality of fields. Because the first application may depend on a plurality of hsp packages, different hsp packages may be identified through values of the plurality of fields.

For example, the plurality of fields used to uniquely identify the hsp package may be a bundles field, a modules field, and a versions field. The bundles field specifies a name of the hsp package, the modules field specifies a name of a module to which the hsp package belongs, and the versions field specifies a version number of the hsp package. Optionally, the modules field may not be included, or the modules field and the versions field may not be included. Each hsp package can be uniquely determined based on values of the bundles field, the modules field, and the versions field, and then a storage path of each hsp package can be determined.

Optionally, the installation information of the first application may alternatively be sent to the application startup module through a plurality of different data packets. For example, the first storage path of the installation package of the first application is sent to the application startup module through one data packet. Storage paths of one or more hsp packages on which the first application depends may be separately sent to the application startup module through a plurality of data packets, and the storage paths of the one or more hsp packages on which the first application depends may alternatively be sent to the application startup module through one data packet. This is not limited in this application.

In the following embodiments of this application, one data packet (for example, the first data packet) is used as an example for description.

Optionally, the package management module may send the one or more data packets to the application startup module through a socket channel.

S1003: The application startup module determines, based on the first field in the first data packet, whether the first application depends on the hsp package.

Optionally, the first field may be the HspList.totalLength field. If the value of the HspList.totalLength field is 1, it indicates that the first application depends on the hsp package, and S1010 to S1015 are performed.

If the value of the HspList.totalLength field is 0, it indicates that the first application has no dependent hsp package, and S1004 to S1009 are performed.

S1004: The application startup module obtains the first storage path of the installation package of the first application from the first data packet.

S1005: The application startup module creates a first temporary storage area, and stores the first storage path of the installation package of the first application in the first temporary storage area.

S1006: The application startup module invokes a DoStartAPP() method to create a process of the first application.

Optionally, in addition to invoking the DoStartAPP() method to create the process of the first application, the application startup module may create the process of the first application by using another method. This is not limited in this application.

S1007: The application startup module invokes a SetAppSandbox() method to create a process sandbox of the first application.

Optionally, in addition to invoking the SetAppSandbox() method to create the process sandbox of the first application, the application startup module may create the process sandbox of the first application by using another method. This is not limited in this application.

S1008: The application startup module invokes the SetAppSandbox() to mount the first storage path of the installation package of the first application to the process sandbox of the first application.

S1009: The application startup module clears and releases the first temporary storage area.

In this way, after mounting the first storage path of the installation package of the first application to the process sandbox of the first application, the application startup module may clear data in the first temporary storage area, and release the first temporary storage area, to save storage space of the electronic device 100.

If the value of the HspList.totalLength field is 1, it indicates that the first application has the dependent hsp package, and S1010 to S1015 may be performed.

S1010: The application startup module obtains, from the first data packet, the first storage path of the installation package of the first application and the second storage path of the first hsp package on which the first application depends.

S1011: The application startup module creates a first temporary storage area and a second temporary storage area, stores the first storage path of the installation package of the first application in the first temporary storage area, and stores, in the second temporary storage area, the second storage path of the first hsp package on which the first application depends.

Optionally, the application startup module may alternatively not create the second temporary storage area, and store both the first storage path of the installation package of the first application and the second storage path of the first hsp package on which the first application depends in the first temporary storage area. This is not limited in this application.

S1012: Invoke a DoStartAPP() method to create a process of the first application.

Optionally, in addition to invoking the DoStartAPP() method to create the process of the first application, the application startup module may create the process of the first application by using another method. This is not limited in this application.

S1013: Invoke a SetAppSandbox() method to create a process sandbox of the first application.

Optionally, in addition to invoking the SetAppSandbox() method to create the process sandbox of the first application, the application startup module may create the process sandbox of the first application by using another method. This is not limited in this application.

S1014: Invoke SetAppSandbox() to mount, to the process sandbox of the first application, the first storage path of the installation package of the first application and the second storage path of the first hsp package on which the first application depends.

S1015: Clear and release the first temporary storage area and the second temporary storage area.

In this way, after mounting, to the process sandbox of the first application, the first storage path of the installation package of the first application and the second storage path of the first hsp package on which the first application depends, the application startup module may clear data in the first temporary storage area and the second temporary storage area, and release the first temporary storage area and the second temporary storage area, to save storage space of the electronic device 100.

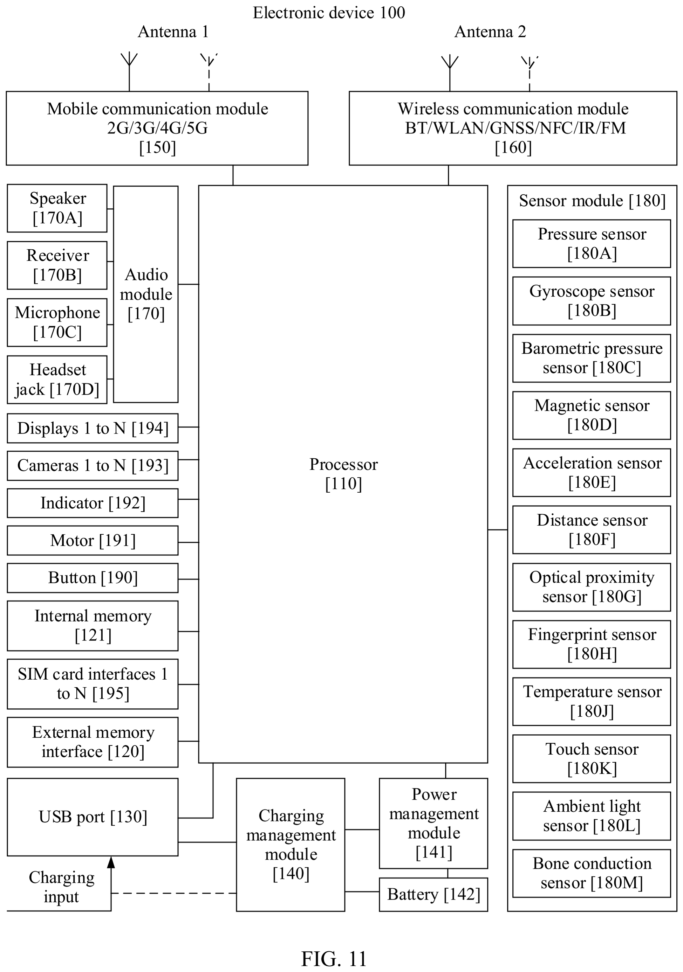

Refer to FIG. 11. FIG. 11 is a diagram of a structure of an electronic device.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in this embodiment of this application.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used to perform asynchronous communication. The bus may be a two-way communication bus. The bus converts to-be-transmitted data between serial communication and parallel communication. In some embodiments, the UART interface is usually used to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be configured to connect to the charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery state of health (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, such as a 5th generation DDR SDRAM generally referred to as DDR5 SDRAM), or the like. The non-volatile memory may include a magnetic disk storage device and a flash memory (flash memory).

The flash memory may be classified, based on an operation principle, into an NOR flash, an NAND flash, a 3D NAND flash, and the like; may be classified, based on a quantity of electric potential levels of a cell, into a single-level cell (single-level cell, SLC), a multi-level cell (multi-level cell, MLC), a triple-level cell (triple-level cell, TLC), a quad-level cell (quad-level cell, QLC), and the like; or the flash memory may be classified, based on storage specifications, into a universal flash storage (English: universal flash storage, UFS), an embedded multi media card (embedded multi media card, eMMC), and the like.

The random access memory may be directly read and written by using the processor 110. The random access memory may be configured to store an executable program (for example, machine instructions) in an operating system or another running program, and may be further configured to store data of a user, data of an application, and the like.

The non-volatile memory may also store an executable program, data of a user, data of an application, and the like, which may be loaded into the random access memory in advance for directly reading and writing by the processor 110.

The external memory interface 120 may be configured to connect to an external non-volatile memory, to extend a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messaging application icon, an instruction for viewing an SMS message is performed. When a touch operation whose touch operation intensity is greater than or equal to the first pressure threshold is performed on the Messaging application icon, an instruction for creating an SMS message is performed.

The gyroscope sensor 180B may be configured to determine a moving posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during image shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature like automatic unlocking upon opening of the flip cover is set based on a detected opening or closing state of the flip cover.

The acceleration sensor 180E may detect accelerations in various directions (usually on three axes) of the electronic device 100. The acceleration sensor may detect a magnitude and a direction of gravity when the electronic device 100 is still. The acceleration sensor may be further configured to identify a posture of the electronic device, and is used in an application, for example, switching between a landscape mode and a portrait mode or a pedometer.

The distance sensor 180F is configured to measure a distance. The electronic device 100 may measure the distance in an infrared manner or a laser manner. In some embodiments, in an image shooting scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a flip cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during image shooting. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based image shooting, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. The display 194 may provide a visual output related to the touch operation. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different regions of the display 194. Different application scenarios (for example, a time reminder, information receiving, an alarm clock, and a game) may also correspond to different vibration feedback effects. The touch vibration feedback effect may be further user-defined.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

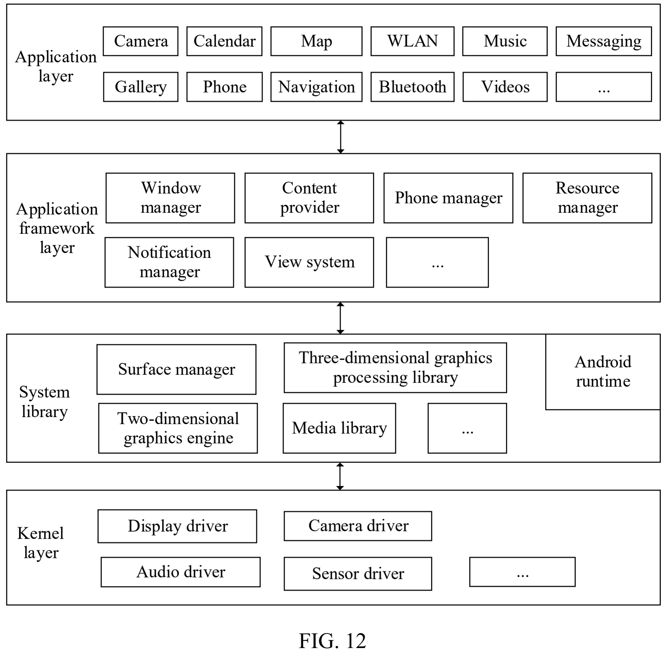

FIG. 12 is a block diagram of a software structure of the electronic device 100 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 12, the application packages may include applications such as Camera, Gallery, Calendar, Phone, Map, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 12, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be configured to construct an application program. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The displayed notification information may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in the status bar, an alert tone is made, the electronic device vibrates, or an indicator blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The implementations of this application may be randomly combined to achieve different technical effect.

All or some of the foregoing embodiments may be implemented by using software, hardware, firmware, or any combination thereof. When software is used to implement the foregoing embodiments, all or some of embodiments may be implemented in a form of a computer program product. The computer program product includes one or more computer instructions. When the computer program instructions are loaded and executed on a computer, procedures or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Persons of ordinary skill in the art may understand that all or some of the procedures of the methods in embodiments may be implemented by a computer program instructing relevant hardware. The program may be stored in a computer-readable storage medium. When the program runs, the procedures of the method embodiments may be included. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made in accordance with the disclosure of the present invention shall be included in the protection scope of the present invention.

## Claims

1. An application running method, wherein the method comprises:
obtaining, by an electronic device in response to a start operation performed by a user on a first application, a first storage path of an installation package of the first application and a second storage path of a shared implementation package on which the first application depends, wherein the first application and the shared implementation package are installed on the electronic device, the shared implementation package is used to implement a preset function, and the first storage path is different from the second storage path;
obtaining, by the electronic device, the installation package of the first application based on the first storage path, wherein reference information to the shared implementation package is configured for the installation package of the first application; and
running, by the electronic device, the first application based on the first storage path, the reference information, and the second storage path.

2. The method according to claim 1, wherein the method further comprises:
obtaining, by the electronic device in response to a start operation performed by the user on a second application, a third storage path of an installation package of the second application and the second storage path of the shared implementation package on which the second application depends, wherein the second application and the shared implementation package are installed on the electronic device, and the third storage path is different from the second storage path;
obtaining, by the electronic device, the installation package of the second application based on the third storage path, wherein the reference information to the shared implementation package is configured for the installation package of the second application; and
running, by the electronic device, the second application based on the third storage path, the reference information, and the second storage path.

3. The method according to claim 1 or 2, wherein before running, by the electronic device, the first application based on the first storage path, the reference information, and the second storage path, the method further comprises:
loading, by the electronic device, the first storage path and the second storage path into a process sandbox of the first application; and
running, by the electronic device, the first application based on the first storage path, the reference information, and the second storage path specifically comprises:
running, by the electronic device, the first application in the process sandbox of the first application based on the first storage path, the reference information, and the second storage path.

4. The method according to any one of claims 1 to 3, wherein before the response of the electronic device to the start operation performed by the user on the first application, the method further comprises:
receiving, by the electronic device, a third user operation, downloading and installing the installation package of the first application in response to the third user operation, and storing the installation package of the first application in the first storage area, wherein a storage path of the installation package of the first application stored in the first storage area is the first storage path, the installation package of the first application comprises a shared interface package, and the shared interface package comprises an identifier of the shared implementation package on which the first application depends;
downloading, by the electronic device, the shared implementation package when the electronic device determines, based on the identifier of the shared implementation package, that the shared implementation package is not installed on the electronic device; and
installing, by the electronic device, the shared implementation package, and storing the shared implementation package in the second storage area, wherein a storage path of the shared implementation package stored in the second storage area is the second storage path.

5. The method according to claim 4, wherein the method further comprises:
when the electronic device determines, based on the identifier of the shared implementation package, that the shared implementation package is installed on the electronic device, obtaining, by the electronic device, the second storage path of the shared implementation package based on the identifier of the shared implementation package.

6. The method according to claim 4 or 5, wherein the shared interface package further comprises the reference information to the shared implementation package; and
before running, by the electronic device, the first application based on the first storage path, the reference information, and the second storage path, the method further comprises:
obtaining, by the electronic device, the shared interface package from the installation package of the first application; and
obtaining, by the electronic device, the reference information to the shared implementation package from the shared interface package.

7. The method according to any one of claims 4 to 6, wherein after obtaining, by the electronic device, the second storage path of the shared implementation package, and before the response of the electronic device to the start operation performed by the user on the first application, the method further comprises:
obtaining, by the electronic device, installation information of the first application based on the first storage path of the installation package of the first application and the second storage path of the shared implementation package on which the first application depends; and
obtaining, by the electronic device in response to the start operation performed by the user on the first application, the first storage path of the installation package of the first application and the second storage path of the shared implementation package on which the first application depends specifically comprises:
obtaining, by the electronic device in response to the start operation performed by the user on the first application, the installation information of the first application; and
obtaining, by the electronic device from the installation information of the first application, the first storage path of the installation package of the first application and the second storage path of the shared implementation package on which the first application depends.

8. The method according to any one of claims 4 to 6, wherein obtaining, by the electronic device in response to the start operation performed by the user on the first application, the first storage path of the installation package of the first application and the second storage path of the shared implementation package on which the first application depends specifically comprises:
obtaining, by the electronic device in response to the start operation performed by the user on the first application, the first storage path of the installation package of the first application based on an identifier of the first application;
obtaining, by the electronic device, the installation package of the first application based on the first storage path;
obtaining, by the electronic device from the installation package of the first application, the identifier of the shared implementation package on which the first application depends; and
obtaining, by the electronic device, the second storage path of the shared implementation package based on the identifier of the shared implementation package.

9. The method according to any one of claims 1 to 8, wherein after running, by the electronic device, the first application based on the first storage path, the reference information, and the second storage path, the method further comprises:
uninstalling, by the electronic device, the shared implementation package when the shared implementation package is not used within first duration.

10. The method according to claim 4 or 5, wherein installing, by the electronic device, the shared implementation package specifically comprises:
when the electronic device determines that the installation package of the first application comprises the shared interface package, obtaining, by the electronic device from the shared interface package, the identifier and a first version number that are of the shared implementation package on which the first application depends;
downloading, by the electronic device, a first-version shared implementation package when the electronic device determines, based on the identifier and the first version number that are of the shared implementation package, that the electronic device does not store the first-version shared implementation package; and
installing, by the electronic device, the first-version shared implementation package, and storing the first-version shared implementation package in the second storage area, wherein a storage path of the first-version shared implementation package stored in the second storage area is the second storage path.

11. The method according to claim 10, wherein downloading, by the electronic device, the first-version shared implementation package specifically comprises:
sending, by the electronic device, the identifier and the first version number that are of the shared implementation package to a server; and
receiving, by the electronic device, the first-version shared implementation package sent by the server.

12. The method according to any one of claims 1 to 11, wherein the preset function comprises any one of the following: a login function, a payment function, a map function, a navigation function, a networking function, an advertisement display function, a data storage function, an image recognition function, a MeeTime function, a projection function, a communication function, a camera function, a multimedia function, a device virtualization function, and a device security function.

13. An application running method, wherein the method comprises:
obtaining, by an electronic device in response to a start operation performed by a user on a first application, a storage path of a shared implementation package on which the first application depends, wherein the first application and the shared implementation package are installed on the electronic device;
loading, by the electronic device, the shared implementation package into a process sandbox of the first application;
displaying, by the electronic device, a user interface of the first application; and
implementing, by the electronic device in response to a tap operation performed by the user on the user interface, a preset function of the tap operation based on the shared implementation package, wherein
the preset function comprises any one of the following: a login function, a payment function, a map function, a navigation function, a networking function, an advertisement display function, a data storage function, an image recognition function, a MeeTime function, a projection function, a communication function, a camera function, a multimedia function, a device virtualization function, and a device security function.

14. The method according to claim 13, wherein before the response to the start operation performed by the user on the first application, the method further comprises:
receiving, by the electronic device, an operation that the user downloads the first application, downloading and installing an installation package of the first application in response to the operation, and storing the installation package of the first application in a first storage area;
obtaining, by the electronic device, a shared interface package from the installation package of the first application, and obtaining an identifier of the shared implementation package from the shared interface package;
downloading, by the electronic device, the shared implementation package when the electronic device determines, based on the identifier of the shared implementation package, that the electronic device does not store the shared implementation package;
installing, by the electronic device, the shared implementation package, and storing the shared implementation package in a second storage area; and
obtaining, by the electronic device, the storage path of the shared implementation package based on the shared implementation package stored in the second storage area.

15. The method according to claim 14, wherein the method further comprises:
when the electronic device determines, based on the identifier of the shared implementation package, that the shared implementation package is stored in the second storage area on the electronic device, obtaining, by the electronic device, the storage path of the shared implementation package based on the shared implementation package stored in the second storage area.

16. The method according to claim 14 or 15, wherein implementing, by the electronic device, the preset function of the tap operation based on the shared implementation package specifically comprises:
obtaining, by the electronic device, the shared interface package from the installation package of the first application;
obtaining, by the electronic device, reference information to the shared implementation package from the shared interface package; and
implementing, by the electronic device, the preset function of the tap operation based on the reference information to the shared implementation package and the shared implementation package.

17. An electronic device, wherein the electronic device comprises a processor and a memory, the memory is coupled to the processor, the memory is configured to store computer program code, the computer program code comprises computer instructions, and the processor invokes the computer instructions, to perform the method according to any one of claims 1 to 12 or 13 to 16.

18. A computer-readable storage medium, configured to store computer instructions, wherein when the computer instructions are run on an electronic device, the electronic device is enabled to perform the method according to any one of claims 1 to 12 or 13 to 16.
